(19)

**Europäisches Patentamt**
**European Patent Office**
**Office européen des brevets**

(11) **EP 2 406 586 B1**

(12) # EUROPÄISCHE PATENTSCHRIFT

(45) Veröffentlichungstag und Bekanntmachung des Hinweises auf die Patenterteilung:
**18.05.2022   Patentblatt 2022/20**

(21) Anmeldenummer: **10707900.6**

(22) Anmeldetag: **09.03.2010**

(51) Internationale Patentklassifikation (IPC):
**G01F 1/32** *(2022.01)*      **G01F 1/74** *(2006.01)*

(52) Gemeinsame Patentklassifikation (CPC):
**G01F 1/666; G01F 1/3209; G01F 1/3266;**
**G01F 1/74**

(86) Internationale Anmeldenummer:
**PCT/EP2010/052979**

(87) Internationale Veröffentlichungsnummer:
**WO 2010/103003 (16.09.2010 Gazette 2010/37)**

(54) **WIRBELSTRÖMUNGSMESSGERÄT ZUM ÜBERWACHEN UND/ODER MESSEN EINER VERTEILTEN TEILCHEN- UND/ODER TRÖPFCHEN-STRÖMUNG**

VORTEX FLOW MEASURING DEVICE FOR MONITORING AND/OR MEASURING A DISTRIBUTED PARTICLE AND/OR DROPLET FLOW

APPAREIL DE MESURE D'ÉCOULEMENT TOURBILLONNAIRE, DESTINÉ À SURVEILLER ET/OU MESURER UN ÉCOULEMENT DISTRIBUÉ DE PARTICULES ET/OU DE GOUTTELETTES

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **12.03.2009   DE 102009001526**

(43) Veröffentlichungstag der Anmeldung:
**18.01.2012   Patentblatt 2012/03**

(73) Patentinhaber: **Endress+Hauser Flowtec AG**
**4153 Reinach (CH)**

(72) Erfinder:
• **LIMACHER, Peter**
  **5023 Biberstein (CH)**
• **HÖCKER, Rainer**
  **79761 Waldshut (DE)**
• **SÜTTERLIN, Dirk**
  **79650 Schopfheim (DE)**

• **GOSSWEILER, Christoph**
  **8404 Winterthur (CH)**

(74) Vertreter: **Andres, Angelika Maria et al**
**Endress+Hauser Group Services**
**(Deutschland) AG+Co. KG**
**Colmarer Straße 6**
**79576 Weil am Rhein (DE)**

(56) Entgegenhaltungen:
**WO-A1-03/062757      WO-A1-2004/038344**
**WO-A2-2009/003963    US-A- 2 869 366**
**US-A- 3 650 152       US-A- 4 674 337**
**US-B1- 6 912 918**

• **None**

EP 2 406 586 B1

**Beschreibung**

Die vorliegende Erfindung betrifft ein Wirbelströmungsmessgerät gemäß dem Oberbegriff des Anspruchs 1 zum Überwachen und/oder Messen eines in einer Rohrleitung strömenden, zumindest zeitweise mindestens zweiphasigen Mediums, das eine, insbesondere gasförmige, erste Phase mit einer ersten Dichte und eine zweite, insbesondere Teilchen- oder Tröpfchenförmige Phase mit einer zweiten Dichte, von der ersten Dichte verschieden, aufweist, mittels eines in das strömende Medium hineinragenden Staukörpers und eines, insbesondere stromab oder innerhalb des Staukörpers platzierten, Wirbelsensors.

Für die Durchflussmessung von Fluiden in Rohrleitungen, insbesondere von Gasströmungen oder Dampfströmungen im Hochtemperaturbereich, werden häufig Wirbelströmungsmessgeräte wie in US 6912918 offenbart, eingesetzt. Bei derartigen Wirbelströmungsmessgeräten wird ein Strömungshindernis derart in dem Strömungspfad angeordnet, dass das jeweilige Fluid beidseitig des Strömungshindernisses vorbeiströmen kann. Dabei lösen sich an dem Strömungshindernis zu beiden Seiten hin Wirbel ab. Über einen weiten Reynoldszahlbereich lösen sich die Wirbel dabei alternierend an den beiden Seiten des Strömungshindernisses ab, so dass eine gestaffelte Anordnung der Wirbel entsteht. Diese gestaffelte Anordnung der Wirbel wird als Kármán'sche Wirbelstraße bezeichnet. Bei Wirbelströmungsmessgeräten wird dabei das Prinzip ausgenutzt, dass die Wirbelablösefrequenz, mit der diese Wirbel gebildet werden, über einen weiten Reynoldszahlbereich proportional zur Strömungsgeschwindigkeit des jeweiligen Fluides ist. Dementsprechend kann aus der erfassten Wirbelablösefrequenz der Wirbel, die im Folgenden als Vortexfrequenz bezeichnet wird, und einen, für den jeweiligen Typ von Wirbelströmungsmessgerät charakteristischen Kalibrierfaktor die Strömungsgeschwindigkeit bestimmt werden.

Ein Wirbelströmungsmessgerät umfasst dabei in der Regel ein Messrohr, in dessen Strömungspfad ein Staukörper als Strömungshindernis angeordnet ist. Der Staukörper erstreckt sich dabei vorzugsweise in diametraler Richtung vollständig oder über einen erheblichen Anteil des Innenquerschnittes des Messrohres derart, dass das jeweilige Fluid beidseitig des Staukörpers vorbeiströmen kann. An dem Staukörper sind dabei in der Regel an beiden Seiten wenigstens zwei Abrisskanten, die gegebenenfalls auch abgerundet sein können, ausgebildet, die ein Ablösen von Wirbeln unterstützen. Im Einsatz wird das Messrohr in eine Rohrleitung, deren Fluidströmung gemessen werden soll, eingesetzt, so dass die Fluidströmung durch das Messrohr und zumindest teilweise gegen den Staukörper strömt.

Ferner weist das Wirbelströmungsmessgerät in der Regel mindestens einen Wirbelsensor auf, der auf von Wirbeln erzeugte Druckschwankungen anspricht. Dieser ist stromabwärts von den beiden Abrisskanten angeordnet. Der Wirbelsensor kann dabei innerhalb des Staukörpers ausgebildet oder stromabwärts von dem Staukörper, insbesondere als separates Bauteil, angeordnet sein. Die von dem Wirbelsensor erfassten Druckschwankungen werden in ein elektrisches Messsignal umgewandelt, dessen Frequenz direkt proportional zu der Strömungsgeschwindigkeit des Fluids ist. Wird zusätzlich die Dichte des Fluids ermittelt oder ist diese bekannt, so kann aus der Strömungsgeschwindigkeit und der Dichte der Massedurchfluss des Fluids berechnet werden.

Wirbelströmungsmessgeräte der oberhalb beschriebenen Art werden vor allem zur Messung von einphasigen Medien, insbesondere Fluiden (Flüssigkeiten, Gase), wie beispielsweise von einem Dampfstrom oder einem Flüssigkeitsstrom, eingesetzt. In speziellen Anwendungen kann es aber auch dazu kommen, dass innerhalb einer Fluidströmung eine zweite oder auch noch weitere Phasen auftreten. Im Folgenden wird zur Vereinfachung von der ersten Phase und von der zweiten Phase eines in der Rohrleitung strömenden zwei- oder mehrphasigen Mediums gesprochen, wobei die erste und zweite Phase die beiden Hauptphasen mit den größten Massenstromanteilen repräsentieren. Weitere Phasen können insbesondere in einer oder auch in beiden Phasen, insbesondere als Festkörperpartikel, enthalten sein. Die erste und die zweite Phase des strömenden, zwei- oder mehrphasigen Mediums können dabei jeweils unterschiedliche Aggregatszustände des gleichen Stoffes, wie es beispielsweise bei einem Wasser-Gerinne in Wasserdampf der Fall ist, oder auch zwei verschiedene Stoffe, wie beispielsweise in einer Flüssigkeit mitgeführter Sand, etc. sein. Vorzugsweise handelt es sich sowohl bei der ersten als auch bei der zweiten Phase jeweils um ein Fluid (Flüssigkeit, Gas). Die Tröpfchen-/Teilchenströmung kann dabei wiederum auch aus mehr als nur einem Medium, insbesondere aus zwei verschiedenen Stoffen, gebildet werden. Auf diese Variante wird, auch bei den unterhalb erläuterten Weiterbildungen jeweils Bezug genommen, auch wenn nicht jedes Mal explizit (durch die Angabe von "mindestens einer zweiten Phase") darauf hingewiesen wird. Die Erfindung ist insbesondere bei solchen Mischungen aus zwei Phasen anwendbar, bei denen der Dichteunterschied zwischen den zwei Phasen derart hoch ist und sich die beiden Phasen nicht oder nur geringfügig mischen, so dass die zweite Phase in Form von Teilchen oder Tröpfchen durch die Strömung der ersten Phase mitgerissen wird.

Es ist bekannt, dass in Wirbelströmungsmessgeräten das Auftreten von zwei oder mehreren Phasen zu Fehlern der aus der Vortexfrequenz ermittelten Strömungsgeschwindigkeit führt.

Grundsätzlich bestehen verschiedene Arten, wie mindestens eine zweite Phase in einer Strömung einer ersten Phase, wie beispielsweise in einer Gasströmung, mitgeführt werden kann. Insbesondere kann die mindestens eine zweite Phase relativ gleichmäßig verteilt als Teilchen und/oder Tröpfchen in der Strömung der ersten Phase mitgeführt werden. Ferner kann die zweite Phase auch als Wandströmung, insbesondere als Gerinne, entlang einer Rohrwand der betreffenden Rohrleitung strömen. Diese beiden Strömungsarten der zweiten und auch dritten Phase können dabei, je nach Anwendung, parallel (mindestens 3 Phasen) oder jeweils nur einzeln auftreten (mindestens 2 Phasen).

Ein Beispiel für das Auftreten von zwei unterschiedlichen Phasen ist das Auftreten von Flüssigkeits-Ansammlungen in Gasleitungen. Dieser Fall ist insbesondere bei Dampfleitungen (Wasserdampfleitungen), in denen sich als zweite Phase Wasser bilden kann, relevant. Wie oberhalb erläutert wird, kann die Flüssigkeits-Ansammlung dabei als verteilte Tröpfchen-Strömung in der ersten Phase (hier: Gas) mitgeführt werden, sie kann aber alternativ oder zusätzlich auch als Wandströmung entlang einer Rohrwand der betreffenden Rohrleitung strömen. Neben den genannten Strömungsformen in Gasleitungen können aber auch in Flüssigkeits- oder Gasströmungen Festkörper, wie beispielsweise Sand oder größere Teilchen, mitgefördert werden. Dabei können die mitgeführten Festkörper, insbesondere wenn diese feinkörnig sind, (gegebenenfalls durchmischt mit einem Teil der ersten Phase) als Wandströmung entlang einer Rohrwand der jeweiligen Rohrleitung strömen. Alternativ oder zusätzlich können die mitgeführten Festkörper zumindest teilweise auch als Teilchen-Strömung, die relativ gleichmäßig über den Rohrquerschnitt verteilt ist, in der Strömung der ersten Phase mitgeführt werden.

Dabei ist es für viele Anwendungen wünschenswert, zuverlässig und ohne wesentlich erhöhten Kostenaufwand das Auftreten einer zweiten Phase in einer Strömung einer ersten Phase zu detektieren und gegebenenfalls auch den Anteil der zweiten Phase, insbesondere deren Massedurchfluss, zu bestimmen. Dies ist insbesondere bei Anwendungen der Fall, in denen Wasserdampf über größere Strecken transportiert wird. Die Förderung von heißem Wasserdampf in Rohrleitungen wird in industriellen Anlagen insbesondere zur Bereitstellung von Energie genutzt, wobei hierzu eine hohe Dampfqualität, was einen niedrigen Anteil an flüssigem Wasser entspricht, erforderlich ist. Insbesondere besteht hierbei oftmals die Anforderung, dass die Dampfqualität über 95% liegt. Die Dampfqualität wird dabei als das Verhältnis des Massedurchflusses des Dampfanteils zu dem Gesamt-Massedurchfluss bestehend aus Dampf und kondensiertem Wasser angegeben. Auch in dem technischen Gebiet der Ölförderung wird heißer Dampf, der in Rohrleitungen gefördert wird, eingesetzt.

Die vorliegende Erfindung behandelt dabei vorwiegend das Problem einer zuverlässigen und zeitnahen Überwachung und Messung einer Teilchen- und/oder Tröpfchen-Strömung mindestens einer zweiten Phase in einer Strömung einer ersten, insbesondere gasförmigen, in einer Rohrleitung strömenden Phase.

In der Druckschrift US 4,674,337 ist eine Vorrichtung zur Bestimmung der Anzahl und der Masse von Teilchen, die in einer Fluidströmung einer vorbestimmten Durchflussrate mitgeführt werden, beschrieben. Dabei weist die Vorrichtung eine im Wesentlichen ebene Prallfläche auf, die derart in der Fluidströmung angeordnet ist, dass ein vorbestimmter Anteil der Teilchen jeweils unter im Wesentlichen dem gleichen Winkel derart auf die Prallfläche auftrifft, dass eine Ansammlung der Teilchen auf der Prallfläche vermieden wird. Bei dem Aufprall der Teilchen erzeugen die Teilchen akustische Signale, die proportional zu der kinetischen Energie der Teilchen sind. Ferner weist die Vorrichtung Mittel auf, durch welche die akustischen Signale aus der Strömung geleitet werden sowie Mittel, durch welche die akustischen Signale anschließend in elektrische Signale gewandelt werden. Die elektrischen Signale werden anschließend durch eine Elektronik derart ausgewertet, dass daraus eine Abschätzung der Gesamtanzahl und der Masse der einzelnen Teilchen erhalten wird. Die Detektion von Teilchen mit einer, in der US 4,674,337 beschriebenen Vorrichtung erfordert dabei, dass hierfür eine separate Vorrichtung bereitgestellt wird, die in eine entsprechende Rohrleitung eingesetzt bzw. eingebaut werden muss. Dies ist mit erhöhten Kosten und Aufwand verbunden.

Die Aufgabe der vorliegenden Erfindung besteht darin, ein Wirbelströmungsmessgerät bereitzustellen, durch welches zuverlässig, zeitnah und ohne erheblichen Kostenaufwand ein in einer Rohrleitung strömendes, zumindest zeitweise zweiphasiges Medium, das eine, insbesondere gasförmige, erste Phase mit einer ersten Dichte und eine zweite, insbesondere flüssige, Phase mit einer zweiten Dichte, von der ersten Dichte verschieden, aufweist, zu überwachen, wobei die zweite Phase hauptsächlich in Form einer Teilchen/Tröpfchenströmung, vorzugsweise homogen über den Rohrquerschnitt verteilt, strömt.

Die Aufgabe wird durch ein Wirbelströmungsmessgerät gemäß Anspruch 1 gelöst. Vorteilhafte Weiterbildungen der Erfindung sind in den Unteransprüchen angegeben.

Gemäß der vorliegenden Erfindung wird ein Wirbelströmungsmessgerät zum Überwachen und/oder Messen eines in einer Rohrleitung strömenden, zumindest zeitweise zwei- oder mehrphasigen Mediums, das eine, insbesondere gasförmige, erste Phase mit einer ersten Dichte und eine zweite, insbesondere flüssige Phase mit einer zweiten Dichte, als Teilchen und/oder Tröpfchen in der ersten Phase verteilt, aufweist, bereitgestellt. Das Wirbelströmungsmessgerät weist zumindest ein, in eine Rohrleitung einsetzbares Messrohr, einen Staukörper und einen, auf auftretende Druckschwankungen ansprechenden Wirbelsensor auf, wobei sich der Staukörper in dem Messrohr quer zu einer Strömungsrichtung derart erstreckt, dass beidseitig von dem Staukörper jeweils ein Strömungspfad gebildet wird, und dass an dem Staukörper beidseitig wenigstens zwei Abrisskanten derart ausgebildet sind, dass sich an diesen im Einsatz Kärmän'sche Wirbel ablösen. Der Wirbelsensor ist in Bezug auf eine Einbaulage stromabwärts von den Abrisskanten angeordnet. Gemäß der vorliegenden Erfindung weist das Wirbelströmungsmessgerät ferner einen akustischen Wandler auf, der in einem Bauteil des Wirbelströmungsmessgerätes, das in einen Strömungspfad innerhalb des Messrohres ragt, insbesondere in dem Staukörper, integral derart ausgebildet ist oder akustisch derart an dieses Bauteil angekoppelt ist, dass durch den Aufprall von Teilchen und/oder Tröpfchen der zweiten Phase auf das Bauteil erzeugte akustische Signale durch den akustischen Wandler in elektrische Signale wandelbar sind.

Demgemäß ermöglicht die vorliegende Erfindung, mit einem Wirbelströmungsmessgerät, durch das im Einsatz in der Regel aus einer, über den Wirbelsensor erfassten Vortexfrequenz der Kärmän'schen Wirbel die Strömungsgeschwindigkeit der ersten Phase eines strömungsfähigen, zwei- oder mehrphasigen Mediums bestimmt werden kann, gleichzeitig auch das Auftreten mindestens einer zweiten Phase in Form einer verteilten Teilchen- und/oder Tröpfchen-Strömung zeitnah (d.h. online) zu detektieren. Für die Detektion der zweiten Phase in Form einer verteilten Teilchen- und/oder Tröpfchen- Strömung ist dabei kein zusätzliches Gerät erforderlich. Dementsprechend können die Anzahl der Bauteile und damit die Kosten gering gehalten werden.

Die Detektion einer verteilten Teilchen-und/oder Tröpfchen-Strömung gelingt dadurch, dass ein (vorhandenes) Bauteil des Wirbelströmungsmessgerätes, das in einen Strömungspfad innerhalb des Messrohres ragt, gleichzeitig als Prallfläche für einen Teil der Teilchen- und/oder Tröpfchen-Strömung innerhalb der ersten Phase genutzt wird. Dementsprechend ist für die Bereitstellung einer geeigneten Prallfläche kein separates Bauteil erforderlich, so dass die Kosten und der bauliche Aufwand gering gehalten werden können. Die dabei, durch den Aufprall von Teilchen und/oder Tröpfchen der zweiten Phase auf das Bauteil erzeugten akustischen Signale sind dann durch den akustischen Wandler in elektrische Signale wandelbar, so dass diese elektrisch durch das Wirbelströmungsmessgerät (insbesondere durch eine entsprechend ausgebildete Elektronik des Wirbelströmungsmessgerätes) verarbeitbar bzw. auswertbar sind. Eine Detektion kann dabei beispielsweise durch eine Elektronik des Wirbelströmungsmessgerätes erfolgen, die derart ausgebildet ist, dass sie dann eine Teilchen- und/oder Tröpfchen-Strömung der zweiten Phase detektiert, wenn ein vorbestimmter Grenzwert des elektrischen Signals oder einer daraus abgeleiteten Messgröße überschritten wird. Dabei ermöglicht das erfindungsgemäße Wirbelströmungsmessgerät ferner, dass der akustische Wandler in die Sensoranordnung des Wirbelsensors und die zugehörige Elektronik in die (bereits vorhandene) Elektronik des Wirbelströmungsmessgerätes integriert wird, so dass weitere Kosten eingespart werden können. Ferner kann vorgesehen sein, dass bei einer Detektion einer Teilchen- und/oder Tröpfchen-Strömung und/oder einer erhöhten Teilchen- und/oder Tröpfchen-Strömung mindestens einer zweiten Phase durch das Wirbelströmungsmessgerät eine Warn- oder Fehlermeldung ausgegeben wird.

Die erste Phase und die (mindestens eine) zweite Phase können dabei jeweils unterschiedliche Aggregatzustände des gleichen Stoffes, wie es beispielsweise bei Wasser-Tröpfchen in Wasserdampf der Fall ist, oder auch zwei verschiedene Stoffe, wie beispielsweise in einer Flüssigkeit oder in einem Gas mitgeführte Festkörper-Teilchen (z.B. Sand), sein. Eine Ausgestaltung der Erfindung betrifft eine Kombination, bei der die erste Phase durch ein Gas und die zweite Phase durch eine Flüssigkeit, die zumindest teilweise als Tröpfchen verteilt in dem strömenden Gas mitgeführt wird, gebildet werden. Insbesondere betrifft die Erfindung eine Kombination, bei der die zweite Phase Wasser (das zumindest teilweise verteilt als Wasser-Tröpfchen mitgeführt wird) und die erste Phase Wasserdampf ist. Die Teilchen- und/oder Tröpfchen-Strömung kann dabei auch aus mehr als nur einem Medium, insbesondere aus Teilchen von mindestens zwei verschiedenen Stoffen, gebildet werden. Auf diese Variante wird, auch bei den unterhalb erläuterten Weiterbildungen jeweils Bezug genommen, auch wenn nicht jedesmal explizit (durch die Angabe von "mindestens einerm zweiten Medium bzw. Phase") darauf hingewiesen wird. Mit "verteilter Teilchen- und/oder Tröpfchen-Strömung" wird dabei allgemein auf eine Strömung Bezug genommen, bei der das mindestens eine, zweite Medium bzw. Phase (zumindest teilweise) als Teilchen und/oder Tröpfchen in der ersten Phase verteilt ist und von diesem mitgeführt wird.

Das Wirbelströmungsmessgerät kann, abgesehen von den explizit hierin erwähnten Besonderheiten, grundsätzlich auf verschiedene Weisen, wie es insbesondere aus dem Stand der Technik bekannt ist, aufgebaut sein. Insbesondere kann der grundsätzliche Aufbau einem Wirbelströmungsmessgerät entsprechen, wie es im einleitenden Teil erläutert wurde. Bezüglich der Anordnung und Ausbildung des Wirbelsensors sind dabei verschiedene Varianten, wie beispielsweise die integrale Ausbildung in dem Staukörper oder die separate Ausbildung als Paddel, das stromabwärts von dem Staukörper angeordnet ist, möglich.

Als "akustischer Wandler" wird ein Wandler, Sensor bzw. Transducer bezeichnet, der die ankommenden akustischen Signale erfasst und in elektrische Signale, die den jeweiligen akustischen Signalen entsprechen, umwandelt. Der akustische Wandler kann als eine Variante beispielsweise integral in dem Bauteil direkt an dem Ort des Bauteils, an dem die Teilchen und/oder Tröpfchen der zweiten Phase auftreffen, ausgebildet sein und die erzeugten akustischen Signale direkt erfassen. Ferner kann der akustische Wandler alternativ auch beabstandet von diesem Ort des Bauteils, entweder integral in dem Bauteil oder auch separat von dem Bauteil, ausgebildet sein. In letzterem Fall muss er akustisch derart an das Bauteil angekoppelt sein, dass sich die jeweiligen akustischen Signale (Schallwellen) von dem Ort des Bauteils, an dem die Teilchen bzw. Tröpfchen auftreffen, zu dem akustischen Wandler ausbreiten können.

Insbesondere kann der akustische Wandler auch außerhalb des Messrohres angeordnet sein.

Gemäß einer vorteilhaften Weiterbildung weist das Bauteil des Wirbelströmungsmessgerätes, insbesondere der Staukörper, eine im Wesentlichen senkrecht zu der Strömungsrichtung ausgerichtete Prallfläche auf, die in einer Einbaulage des Wirbelströmungsmessgerätes der Strömung zugewandt ist. Auf diese Weise wird die Prallfläche direkt von der Teilchen- und/oder Tröpfchen-Strömung angeströmt und das Verhältnis der Größe der Prallfläche zu der Gesamtfläche des Innenquerschnitts des Messrohres kann einfach bestimmt werden. Ferner treffen die Teilchen und/oder Tröpfchen über die Prallfläche im Wesentlichen unter einem einheitlichen Winkel auf. Diese Eigenschaften sind nicht nur vorteilhaft für eine zuverlässige Detektion einer zweiten Phase in Form einer Teilchen- und/oder Tröpfchen-Strömung. Sie erleichtern auch Berechnungen, um quantitativ die Teilchen- und/oder Tröpfchen-Strömung über den gesamten Innenquerschnitt des Messrohres abzuschätzen.

Erfindungsgemäß wird das Bauteil, bei welchem der Aufprall der Teilchen- und/oder Tröpfchen-Strömung akustisch erfasst wird, durch den Staukörper des Wirbelströmungsmessgerätes gebildet. Der Staukörper hat dabei den Vorteil, dass dieser in der Regel dreieckig (bzw. Δ-förmig) im Querschnitt ist und eine Fläche senkrecht zu der Strömungsrichtung ausgerichtet und der Strömung zugewandt ist. Diese zugewandte Fläche bildet dabei bereits eine Prallfläche für die ankommenden Teilchen und/oder Tröpfchen mit definierter Größe. Dementsprechend kann im Hinblick auf eine quantitative Bestimmung der Teilchen- und/oder Tröpfchen-Strömung auch einfach deren Verhältnis zu dem Innenquerschnitt des Messrohres bestimmt werden. Die beiden weiteren Flächen laufen entlang der Strömungsrichtung zusammen, so dass sich die Breite des Staukörpers entlang der Strömungsrichtung verjüngt. Die beiden Abrisskanten, die beidseitig der Prallfläche den Übergang zu den jeweiligen Seitenflächen bilden, können dabei auch abgerundet sein. Neben der erläuterten Staukörper-Form mit dreieckigem Querschnitt existieren auch noch alternative Formen von Staukörpern, die sich ebenfalls sehr gut für die Verwendung als Bauteil, bei welchem der Aufprall der Teilchen- und/oder Tröpfchen-Strömung akustisch erfasst wird, eignen. Ein weiterer Vorteil bei der Verwendung des Staukörpers ist, dass die ankommende Strömung aufgrund der wechselseitigen Wirbelablösung am Staukörper bereits im Bereich vor dem Staukörper beeinflusst wird. Dies führt dazu, dass die Prallfläche des Staukörpers nicht genau senkrecht sondern wechselseitig (entsprechend der Frequenz der Wirbelablösung) leicht schräg angeströmt wird. Dadurch wird effektiv verhindert, dass sich Teilchen und/oder Tröpfchen auf der Prallfläche des Staukörpers ansammeln.

Grundsätzlich kann die Umwandlung der akustischen Signale in elektrische Signale durch den akustischen Wandler auf verschiedene Weise erfolgen. Gemäß einer vorteilhaften Weiterbildung wird der akustische Wandler durch einen piezoelektrischen oder durch einen kapazitiven Wandler gebildet. Gemäß einer vorteilhaften Weiterbildung ist der akustische Wandler außerhalb des Messrohres angeordnet und ist akustisch an den Staukörper, angekoppelt. Auf diese Weise ist der akustische Wandler weitgehend entkoppelt von der Prozesstemperatur und dem Prozessdruck, so dass dessen Funktionsweise nicht oder nur wenig durch diese Größen beeinflusst wird.

Erfindungsgemäß ist eine Elektronik des Wirbelströmungsmessgerätes derart ausgebildet, dass durch diese die von dem akustischen Wandler bereitgestellten, elektrischen Signale nach vorbestimmten Kriterien ausgewertet werden. Durch die vorbestimmten Kriterien kann insbesondere festgelegt werden, bei welchen charakteristischen Eigenschaften der elektrischen Signale (beispielsweise bei Überschreiten eines vorbestimmten Signalpegels) eine Teilchen- und/oder Tröpfchenströmung detektiert wird. Die Elektronik kann dabei in eine (bereits vorhandene) Elektronik des Wirbelströmungsmessgerätes, durch welche ein Messsignal des Wirbelsensors ausgewertet wird, integriert werden. Mit "Elektronik" wird in dem Zusammenhang der vorliegenden Anmeldung sowohl auf eine elektronische Schaltung, durch welche Signale, insbesondere elektrische Signale, analog verarbeitet werden, als auch auf eine digital arbeitende Schaltung oder einen Prozessor, durch welche elektrische Signale digital verarbeitet werden, Bezug genommen. Insbesondere können diese beiden Formen auch gemischt auftreten.

Gemäß einer vorteilhaften Weiterbildung ist eine Elektronik des Wirbelströmungsmessgerätes derart ausgebildet, dass durch diese die von dem akustischen Wandler bereitgestellten elektrischen Signale auf eine auszuwertende Bandbreite gefiltert werden. Dadurch können Fehler aufgrund von Störsignalen mit Frequenzen außerhalb des relevanten Frequenzbereiches vermieden werden. Daneben können weitere Signalverarbeitungen, wie beispielsweise eine Verstärkung der elektrischen Signale vor oder auch nach der Filterung, durchgeführt werden.

Erfindungsgemäß ist eine Elektronik des Wirbelströmungsmessgerätes derart ausgebildet, dass durch diese aus den von dem akustischen Wandler bereitgestellten, elektrischen Signalen durch eine spektrale Signalverarbeitung und/oder durch eine statistische Auswertung eine Messgröße bestimmt wird, die dann nach vorbestimmten Kriterien ausgewertet wird. Beispielsweise können für solch eine Messgröße Grenzwerte festgelegt werden, bei deren Über- oder Unterschreiten eine Warnmeldung und/oder eine entsprechende Mitteilung (beispielsweise über eine Anzeige) bezüglich des Vorliegens einer Teilchen- und/oder Tröpfchenströmung an den Benutzer ausgegeben wird. Ferner können basierend auf solch einer Messgröße, wie unterhalb in Bezug auf Weiterbildungen erläutert wird, weitere Berechnungen durchgeführt werden, um quantitative Aussagen bezüglich der zweiten Phase in Form einer Teilchen- und/oder Tröpfchen-Strömung machen zu können.

Erfindungsgemäß ist eine Elektronik des Wirbelströmungsmessgerätes derart ausgebildet, dass diese aus, über die Zeit erfassten Werten der, gegebenenfalls gefilterten, von dem akustischen Wandler bereitgestellten, elektrischen Signale einen RMS-Wert (RMS: Root Mean Square; quadratischer Mittelwert) bildet und diesen als Messgröße auswertet. Im Experiment hat sich gezeigt, dass sich der RMS-Wert als Messgröße für eine weitere Auswertung gut eignet. Werden beispielsweise N Werte des (hier gefilterten) elektrischen Signals $S(t_i)$, die zu N verschiedenen Zeiten $t_i$ (i=1-N) erfasst wurden, zur Berechnung des RMS-Wertes $\overline{S}$ herangezogen, so kann der RMS-Wert anhand der nachfolgenden Gleichung erhalten werden:

$$(1) \qquad \overline{S} = \frac{1}{N} \sqrt{\sum_{i=1}^{i=N} S(t_i)^2}$$

Erfindungsgemäß ist die Elektronik des Wirbelströmungsmessgerätes derart ausgebildet, dass diese aus der Messgröße mittels eines, durch eine Kalibrierung zu bestimmenden Übertragungsfaktors, durch den die kinetische Energie einzelner Teilchen und/oder Tröpfchen bzw. die kinetische Leistung der Teilchen- und/oder Tröpfchen-Strömung mit der Messgröße korreliert wird, und der Geschwindigkeit der Teilchen- und/oder Tröpfchen-Strömung eine Anzahl und Masse einzelner Teilchen und/oder Tröpfchen bzw. den Massedurchfluss der Teilchen- und/oder Tröpfchen-Strömung bestimmt. Auf diese Weise ist eine quantitative Bestimmung der zweiten Phase in Form einer Teilchen- und/oder Tröpfchen-Strömung möglich.

Je nach Anwendung kann der Übertragungsfaktor gemäß einer ersten Variante derart gewählt und durch Kalibrierung bestimmt werden, dass die Messgröße $M$, dass heißt der oberhalb genannte RMS-Wert $\overline{S}$, über den Übertragungsfaktor $C_1$ mit der kinetischen Energie $E_{KIN}$ eines einzelnen, auftreffenden Teilchens oder Tröpfchens korreliert wird. Diese Beziehung ist in der nachstehenden Gleichung (2) wiedergegeben, wobei $m_T$ die Masse eines einzelnen Teilchens oder Tröpfchens und v dessen Geschwindigkeit ist:

$$(2) \qquad E_{KIN} = \frac{1}{2} m_T v^2 = C_1 \overline{M}$$

Wie anhand der Gleichung (2) ersichtlich ist, kann dementsprechend aus der Messgröße M, dem Übertragungsfaktor $C_1$ und der Geschwindigkeit v die Masse $m_T$ eines einzelnen Teilchens bzw. Tröpfchens bestimmt werden. Die Geschwindigkeit des Teilchens wird wie unterhalb in Bezug auf eine Weiterbildung erläutert wird, ebenfalls durch das Wirbelströmungsmessgerät aus der Vortexfrequenz bestimmt.

Diese erste Variante ist insbesondere dann vorteilhaft, wenn die Dichte der einzelnen Teilchen und/oder Tröpfchen in der Teilchen- und/oder Tröpfchen-Strömung derart niedrig ist, dass die verschiedenen Auftreffzeitpunkte der einzelnen Teilchen und/oder Tröpfchen auf das betreffende Bauteil des Wirbelströmungsmessgerätes separat akustisch detektierbar sind. Die Anzahl der Teilchen und/oder Tröpfchen kann durch Zählen der jeweiligen Einschläge ermittelt werden. Je nach Anwendung kann der Übertragungsfaktor auch gemäß einer zweiten Variante derart gewählt und durch Kalibrierung bestimmt werden, dass die Messgröße M, dass heißt der oberhalb genannte RMS-Wert $\overline{S}$, über den Übertragungsfaktor $C_2$ mit der kinetischen Leistung $P_{KIN}$ der Teilchen- und/oder Tröpfchen-Strömung korreliert wird. Diese Beziehung ist in der nachstehenden Gleichung (3) wiedergegeben, wobei m/t der Massedurchfluss der Teilchen- und/oder Tröpfchen-Strömung (wobei hierin nur die Masse der Teilchen und/oder Tröpfchen, nicht aber die Masse der ersten Phase eingeht) und v dessen Geschwindigkeit ist:

$$(3) \qquad P_{KIN} = \frac{1}{2} \frac{m}{t} v^2 = C_2 \overline{M}$$

Wie anhand der Gleichung (3) ersichtlich ist, kann dementsprechend aus der Messgröße M, dem Übertragungsfaktor $C_2$ und der Geschwindigkeit v der Massedurchfluss m/t der Teilchen- und/oder Tröpfchen-Strömung bestimmt werden. Die Geschwindigkeit v der Teilchen wird wie unterhalb in Bezug auf eine Weiterbildung erläutert wird, ebenfalls durch das Wirbelströmungsmessgerät aus der Vortexfrequenz bestimmt.

Diese zweite Variante ist insbesondere dann vorteilhaft, wenn die Dichte der einzelnen Teilchen und/oder Tröpfchen in der Teilchen- und/oder Tröpfchen-Strömung derart hoch ist, dass die verschiedenen Einschläge der einzelnen Teilchen und/oder Tröpfchen auf das betreffende Bauteil des Wirbelströmungsmessgerätes nicht mehr separat akustisch detektierbar sind.

Sowohl bei der ersten als auch bei der zweiten Variante kann der Übertragungsfaktor $C_1$ bzw. $C_2$ als Konstante gewählt werden, so dass die Kalibrierung und die durchzuführenden Berechnungen einfach sind. Alternativ kann der Übertragungsfaktor $C_1$ bzw. $C_2$ aber auch in Abhängigkeit von weiteren Größen, wie beispielsweise einer Temperatur oder eines Druckes, definiert werden. Dadurch können weitere Einflüsse bei der quantitativen Bestimmung mit berücksichtigt werden.

Erfindungsgemäß ist der Wirbelsensor derart ausgebildet, dass durch diesen im Einsatz Druckschwankungen erfasst und in ein elektrisches Messsignal umgewandelt werden, wobei eine Elektronik des Wirbelströmungsmessgerätes derart ausgebildet ist, dass diese aus den erfassten Druckschwankungen eine Vortexfrequenz und daraus wiederum eine Strömungsgeschwindigkeit der ersten Phase (sowie damit der Teilchen- und/oder Tröpfchen-Strömung) bestimmt. Wie oberhalb erläutert wird, ist die Vortexfrequenz über einen weiten Reynoldszahlbereich proportional zur Geschwindigkeit des jeweils gemessenen Fluids. Diese Abhängigkeit ist allgemein bekannt und wird in Wirbelströmungsmessgeräten in bekannter Weise zur Bestimmung der Geschwindigkeit des jeweils gemessenen Fluids ausgenutzt. Durch die, gemäß der Erfindung vorgesehene Bestimmung der Strömungsgeschwindigkeit der ersten Phase aus der Vortexfrequenz wird gleichzeitig auch die Geschwindigkeit v der Teilchen- und/oder Tröpfchen-Strömung bestimmt (unter der Annahme, dass die Teilchen- und/oder Tröpfchen-Strömung mit der gleichen Geschwindigkeit wie das erste Fluid strömt). Dementsprechend kann die, durch das Wirbelströmungsmessgerät bestimmte Geschwindigkeit v der Teilchen- und/oder Tröpfchen-Strömung in die Gleichung(en) (2) und/oder (3) eingesetzt und daraus dann die Masse $m_T$ einzelner Teilchen oder Tröpfchen bzw. der Massedurchfluss m/t der Teilchen- und/oder Tröpfchen-Strömung bestimmt werden.

Gemäß einer vorteilhaften Weiterbildung weist das Wirbelströmungsmessgerät mindestens eine Blende zur Homogenisierung der Teilchen- und/oder Tröpfchen-Strömung der zweiten Phase, insbesondere eine siebförmige, gelochte oder gitterförmige Blende, auf, die bezüglich der Strömungsrichtung vor dem Bauteil des Wirbelströmungsmessgerätes, in dem der akustische Wandler integral ausgebildet oder an das der akustische Wandler akustisch angekoppelt ist, angeordnet ist. Durch solch eine Blende kann eine gleichmäßig über den Innenquerschnitt des Messrohres verteilte Teilchen- und/oder Tröpfchen-Strömung erzielt werden. Aus der Anzahl und Masse einzelner Teilchen und/oder Tröpfchen (siehe erste Variante) bzw. aus dem Massedurchfluss der Teilchen- und/oder Tröpfchen-Strömung (siehe zweite Variante), die aufgrund des Aufpralls auf das Bauteil bestimmt wurde(n), kann dann auf einfache Weise (linear) auf die Gesamtanzahl und Masse einzelner Teilchen und/oder Tröpfchen bzw. auf den Gesamtmassedurchfluss der Teilchen- und/oder Tröpfchen-Strömung innerhalb des Messrohres hochgerechnet werden. Dabei können eine oder mehrere Blenden vor dem Bauteil des Wirbelströmungsmessgerätes angeordnet sein. Insbesondere kann die Anordnung derart optimiert werden, dass eine möglichst homogen über den Innenquerschnitt des Messrohres verteilte Teilchen- und/oder Tröpfchen-Strömung erzielt wird.

Ferner kann die mindestens eine Blende auch derart angeordnet sein, dass sie sich bis zu einer Rohrwand des Messrohres erstreckt. Damit kann auch eine zweite oder dritte Phase in Form einer Wandströmung, die entlang der Rohrwand des Messrohres strömt, gezwungen werden, im Bereich des Wirbelströmungsmessgerätes und insbesondere des Bauteils, über das eine akustische Erfassung durchgeführt wird, als Teilchen- und/oder Tröpfchen-Strömung zu strömen. Auf diese Weise kann auch der Anteil der zweiten oder dritten Phase, die als Wandströmung entlang der Rohrwand des Messrohres strömt, detektiert und gegebenenfalls quantitativ durch das erfindungsgemäße Wirbelströmungsmessgerät erfasst werden. Die Vorsehung einer Blende, um eine Wandströmung in eine Teilchen- und/oder Tröpfchen-Strömung zu zwingen, ist jedoch nicht bei allen Anwendungen möglich.

Es ist wünschenswert, eine zweite oder eine dritte Phase in Form eine Wandströmung auch direkt zu überwachen und gegebenenfalls quantitativ zu erfassen. Gemäß einer vorteilhaften Weiterbildung ist dementsprechend vorgesehen, dass der Wirbelsensor des Wirbelströmungsmessgerätes einen, auf auftretende Druckschwankungen ansprechenden, sensitiven Abschnitt, der zumindest teilweise angrenzend an der Rohrwand des Messrohres angeordnet ist, aufweist, um hierüber eine zweite oder dritte Phase in Form einer entlang einer Rohrwand strömenden Wandströmung, insbesondere ein Gerinne, des mehrphasigen in der Rohrleitung strömenden Mediums zu detektieren. Dabei weist die erste, insbesondere gasförmigen Phase des strömenden Mediums eine geringere Dichte als die zweite bzw. dritte Phase auf. Das Wirbelströmungsmessgerät ist dabei derart ausgebildet, dass Druckschwankungen, die im Einsatz über den sensitiven Abschnitt erfasst werden, in ein elektrisches Messsignal umgewandelt werden. Ferner ist eine Elektronik des Wirbelströmungsmessgerätes, durch die das elektrische Messsignal im Einsatz verarbeitet wird, derart ausgebildet, dass bei Erfassen eines Messsignals, das charakteristisch für eine Wechselwirkung einer Wandströmung der zweiten bzw. dritten, entlang einer Rohrwand des Messrohres strömenden Phase mit dem sensitiven Abschnitt des Wirbelsensors ist, auf die Existenz einer Wandströmung der zweiten bzw. dritten Phase in dem Messrohr geschlossen wird.

Demgemäß ermöglicht die vorliegende Weiterbildung, mit einem Wirbelströmungsmessgerät, durch das im Einsatz aus der erfassten Vortexfrequenz der Wirbel die Strömungsgeschwindigkeit der ersten Phase, insbesondere eines Gases, bestimmt werden kann, gleichzeitig auch das Auftreten einer Wandströmung der zweiten und/oder dritten, entlang der Rohrwand des Messrohrs strömenden Phase, insbesondere eines Gerinnes, zeitnah (d.h. online) zu detektieren. Für die Detektion einer Wandströmung ist dabei kein zusätzliches Gerät erforderlich. Dementsprechend können die Anzahl der Bauteile und damit die Kosten gering gehalten werden. Die Überwachung gelingt dabei insbesondere dadurch, dass der sensitive Abschnitt zumindest teilweise angrenzend an der Rohrwand des Messrohres angeordnet ist, so dass bei Vorbeiströmen einer Wandströmung diese mit dem sensitiven Abschnitt wechselwirken kann. Durch den sensitiven Abschnitt können dementsprechend zusätzlich zu den Wirbeln der ersten Phase auch die, durch eine Wandströmung der zweiten bzw. dritten Phase bedingten Wechselwirkungen erfasst werden, was zu einem Messsignal führt, das charakteristisch für diese Wechselwirkung der Wandströmung mit dem sensitiven Abschnitt des Wirbelsensors ist. Anhand dieses Messsignals kann dann auf einfache Weise festgestellt werden, ob eine zweite bzw. dritte Phase in Form einer Wandströmung vorliegt. Dies kann vorzugsweise automatisiert durch das Wirbelströmungsmessgerät (insbesondere durch eine Elektronik des Wirbelströmungsmessgerätes) erfolgen und einem Benutzer zur Anzeige gebracht oder auf andere Weise signalisiert werden.

Gemäß dieser Weiterbildung kann dabei sowohl mindestens eine Phase in Form einer Wandströmung neben einer gegebenenfalls möglichen zeitweise auftretenden weiteren Phase in Form einer Teilchen- und/oder Tröpfchen-Strömung detektiert werden. Vorzugsweise handelt es sich bei den jeweiligen Phasen (der Wandströmung sowie der Teilchen- und/oder Tröpfchenströmung) jeweils um ein Medium im flüssigen Aggregatszustand. Die Weiterbildung ist insbesondere bei solchen Mischungen aus der ersten Phase und mindestens einer zweiten und/oder dritten Phase anwendbar, bei denen der Dichteunterschied zwischen der ersten Phase und der zweiten und/oder dritten Phase derart hoch ist, dass sie sich nicht oder nur geringfügig mischen und dementsprechend die zweite bzw. dritte Phase bei der Strömung durch eine Rohrleitung zumindest teilweise als Wandströmung strömt. Bei einer schräg oder waagrecht verlaufenden Rohrleitung strömt die zweite und/oder dritte Phase unter diesen Voraussetzungen dann in der Regel entlang einem unteren Rohrwandabschnitt der Rohrleitung (bzw. des Messrohres).

Unter einer "angrenzenden Anordnung" des sensitiven Abschnittes an der Rohrwand werden dabei Anordnungen umfasst, bei denen der sensitive Abschnitt direkt an der Rohrwand des Messrohres beginnt sowie Anordnungen, bei denen der sensitive Abschnitt so gering von der Rohrwand des Messrohres beabstandet ist, dass bei typischen, auftretenden Wandströmungen die Dicke der Wandströmung größer als der Abstand des sensitiven Abschnittes von der Rohrwand ist und damit eine Wechselwirkung der Wandströmung mit dem sensitiven Abschnitt auftreten kann. Ferner erstreckt sich der sensitive Abschnitt vorzugsweise in Richtung zu dem Innenraum des Messrohres, so dass auch eine Wechselwirkung mit der Strömung der ersten Phase auftritt. Insbesondere ist dabei vorgesehen, dass sich der sensitive Abschnitt parallel zu dem Staukörper erstreckt und bezüglich der Strömungsrichtung fluchtend zu dem Staukörper angeordnet ist.

Als Messsignal, das charakteristisch für eine Wechselwirkung einer Wandströmung des zweiten und/oder dritten, entlang einer Rohrwand des Messrohres strömenden zwei- oder mehrphasigen Mediums mit dem sensitiven Abschnitt des Wirbelsensors ist, wird insbesondere ein Messsignal verstanden, das gegenüber einem Messsignal bei einer reinen Strömung der ersten Phase charakteristische Abweichungen aufweist, wobei diese charakteristischen Abweichungen durch die Wechselwirkung der Wandströmung der zweiten (bzw. dritten) Phase des strömenden, zwei- oder mehrphasigen Mediums mit dem sensitiven Abschnitt des Wirbelsensors hervorgerufen werden. Die Wechselwirkung ist dabei aufgrund der Anordnung des sensitiven Abschnittes vorzugsweise direkt, was bedeutet, dass die Wandströmung direkt an dem sensitiven Abschnitt (gegebenenfalls unter Berührung desselben) vorbeiströmt und damit Druckschwankungen, die über den sensitiven Abschnitt erfasst werden, auslöst.

Gemäß einer vorteilhaften Weiterbildung ist das Messrohr abgewinkelt zu einer vertikalen Richtung, insbesondere waagrecht, angeordnet und der sensitive Abschnitt des Wirbelsensors ist in einer unteren Hälfte des Messrohres, insbesondere auf der am tiefsten gelegenen Mantellinie des Messrohres, angeordnet. Durch einen derartigen waagrechten oder schrägen Verlauf des Messrohres sammelt sich die Wandströmung der zweiten bzw. dritten Phase aufgrund der Schwerkraft vorwiegend in einer unteren Hälfte des Messrohres an. Dementsprechend kann durch die gezielte Anordnung des sensitiven Abschnittes in einer unteren Hälfte des Messrohres, insbesondere auf der am tiefsten gelegenen Mantellinie des Messrohres, sichergestellt werden, dass die Wandströmung der zweiten bzw. dritten Phase durch das Wirbelströmungsmessgerät detektiert wird. Vorzugsweise ist das Messrohr dabei waagrecht, das heißt senkrecht zu der Richtung der Schwerkraft, oder im Wesentlichen waagrecht angeordnet, so dass sich die Schwerkraft nicht oder nicht merklich auf die Strömungsgeschwindigkeit der zweiten Phase auswirkt.

Gemäß einer vorteilhaften Weiterbildung wird der sensitive Abschnitt des Wirbelsensors durch einen schwenkbaren Abschnitt gebildet, der durch auftretende Druckschwankungen, hervorgerufen durch die am Staukörper ablösenden Wirbel, in Schwenkbewegung versetzbar ist. Dabei wird das elektrische Messsignal erzeugt, indem Schwenkbewegungen des schwenkbaren Abschnittes erfasst und in das elektrische Messsignal umgewandelt werden. Die Umwandlung erfolgt dabei vorzugsweise derart, dass die zeitliche Entwicklung der Amplitude des elektrischen Messsignals den ausgeführten Schwenkbewegungen entspricht. Die Umwandlung der Schwenkbewegungen in ein elektrisches Messsignal kann dabei auf verschiedene Weise, insbesondere über eine kapazitive, piezoresistive, optische. eine Ultraschall-, eine Thermistor-, oder über eine mechanische Erfassung der jeweiligen Position des schwenkbaren Abschnittes sowie über eine Erfassung der jeweiligen Position des schwenkbaren Abschnittes über Druck- oder Dehnmessstreifen erfolgen.

Insbesondere kann die Erfassung der jeweiligen (zeitabhängigen) Position des schwenkbaren Abschnittes mit einem DSC-Sensor (DSC: Digital Switched Capacitor; deutsch: digital geschalteter Kondensator) erfolgen. Bei diesem Sensortyp werden die Schwenkbewegungen des schwenkbaren Abschnittes mittels zweier elektrisch geschalteter Kapazitäten in differentielle elektrische Ladungsänderungen umgewandelt und durch eine geeignete Messelektronik ausgewertet.

Bei einem Typ solch eines DSC-Sensors werden beispielsweise die Schwenkbewegungen des schwenkbaren Abschnittes auf eine hülsenartige Mittelelektrode übertragen. Insbesondere kann die hülsenartige Mittelelektrode direkt auf einer Verlängerung des schwenkbaren Abschnittes ausgebildet sein. Ferner ist eine, von den Druckschwankungen entkoppelte Außenelektrode vorgesehen, die aus zwei Halbschalen, die konzentrisch zu der hülsenartigen Mittelelektrode angeordnet sind, gebildet wird. Dementsprechend bildet die hülsenartige Mittelelektrode mit den beiden Halbschalen jeweils die beiden Kapazitäten $C_1$ und $C_2$. Die, von den Druckschwankungen entkoppelte Außenelektrode ist dabei in der Regel, abgesehen von Bewegungen aufgrund äußerer Störeinflüsse, ortsfest angeordnet. Entsprechend der Schwenkbewegungen des schwenkbaren Abschnittes ändern sich die Kapazitäten $C_1$ und $C_2$, wobei diese Kapazitätsänderungen durch eine geeignete Messelektronik ausgewertet werden.

Wie oberhalb erläutert wird, kann der schwenkbare Abschnitt des Wirbelsensors, der insbesondere als schwenkbare Hülse ausgebildet sein kann, in dem Staukörper integriert sein. Insbesondere kann er in einer Sackbohrung des Staukörpers aufgenommen sein. Die Sackbohrung steht dabei über eine oder mehrere Durchgangsöffnungen mit der Strömung innerhalb des Messrohres in Verbindung, so dass der schwenkbare Abschnitt über diese Durchgangsöffnungen Druckschwankungen aufnehmen kann. Ferner weist der Wirbelsensor in der Regel einen, von den Druckschwankungen entkoppelten Abschnitt, der beispielsweise innerhalb des schwenkbaren Abschnittes, insbesondere innerhalb der schwenkbaren Hülse, angeordnet ist, auf. Der von den Druckschwankungen entkoppelte Abschnitt ist dabei in der Regel, abgesehen von Bewegungen aufgrund äußerer Störeinflüsse, ortsfest angeordnet. Dadurch können auf eine der oberhalb erläuterten Weisen die Abstandsänderungen zwischen dem schwenkbaren und dem entkoppelten Abschnitt erfasst und in ein elektrisches Messsignal umgewandelt werden. Gemäß der vorliegenden Erfindung sind dabei die Durchgangsöffnungen zumindest teilweise angrenzend an der Rohrwand des Messrohres angeordnet, so dass eine Wechselwirkung einer Wandströmung der zweiten bzw. dritten, entlang der Rohrwand des Messrohres strömenden Phase mit dem schwenkbaren Abschnitt des Wirbelsensors ermöglicht wird. Ist das Messrohr schräg oder waagrecht angeordnet, so sind die Durchgangsöffnungen vorzugsweise zumindest teilweise in einer unteren Hälfte des Messrohres angeordnet.

Ferner kann der schwenkbare Abschnitt des Wirbelsensors durch ein separat ausgebildetes, stromabwärts von dem Staukörper oder auch teilweise respektive komplett in den Staukörper durch Aussparung eingelassenes, angeordnetes, schwenkbares Paddel gebildet werden, das sich von einer Rohrwand des Messrohres in den Strömungspfad erstreckt. Vorzugsweise erstreckt sich das Paddel dabei im Wesentlichen radial (zu dem Messrohr) und parallel zu dem Staukörper und ist entlang der Erstreckungsrichtung des Messrohres fluchtend zu dem Staukörper angeordnet. Wiederum weist der Wirbelsensor auch bei dieser Ausgestaltung in der Regel einen, von den Druckschwankungen entkoppelten Abschnitt auf. Der von den Druckschwankungen entkoppelte Abschnitt ist dabei in der Regel, abgesehen von Bewegungen aufgrund äußerer Störeinflüsse, ortsfest angeordnet. Dementsprechend können die Abstandsänderungen zwischen dem schwenkbaren und dem entkoppelten Abschnitt auf eine der oberhalb erläuterten Weisen erfasst und in ein elektrisches Messsignal umgewandelt werden.

Das zeitabhängige (elektrische) Messsignal $y(t)$ kann näherungsweise mit einem Frequenz/Amplitudenmodulationsignal mit überlagertem Rauschanteil beschrieben werden. Es setzt sich zusammen aus dem eigentlichen Vortexsignal, welches durch eine Sinusschwingung mit einer zeitabhängigen Amplitude $A(t)$ und einer ebenfalls zeitabhängigen Phase $\Theta(t)$ beschrieben werden kann plus additiver Rauschanteile $R(t)$ unterschiedlicher Herkunft und Charakteristik. So wird das Rauschen durch differentielle Druckschwankungen in der Strömung durch Strömungsrauschen verursacht. Die Rauschanteile können auch durch überlagerte Schwingungen aufgrund von Vibrationen oder aber durch den Sensor oder Aufbau des Messgerätes gegebene Resonanzsignale, welche mechanisch in den Sensor eingekoppelt werden, auftreten. Das Vortexsignal kann daher näherungsweise durch folgende Formeln (4) beschrieben werden:

$$
\begin{aligned}
y(t) &= A(t) \cdot \sin\big(\Theta(t)\big) + R(t) \\
A(t) &= A_0 + \Delta a \\
(4)\quad \Theta(t) &= \omega_{mv}(t) \cdot t + \int_0^t m(t)\,dt \\
2 \cdot \pi \cdot f_{mv}(t) &= \omega_{mv}(t) = \dot{\Theta}(t)
\end{aligned}
$$

Die zeitabhängige Amplitude $A(t)$ setzt sich aus einer mittleren Amplitude $A_0$ und einer additiven Amplitudenvariation $\Delta a$, welche eine angenommene Gauß'sche Verteilung mit Mittelwert 0 und Varianz $\sigma_A^2$ besitzt, zusammen. Der Zusammenhang der veränderlichen Phase $\Theta(t)$ und der momentanen Vortexfrequenz $f_{mv}(t)$ ist gegeben durch die erste Ableitung der veränderlichen Phase $\Theta(t)$ bestehend aus der momentanen Vortex-Kreisfrequenz $\omega_{mv}(t)$ und dem additiven Phasenrauschen, welches durch das Integral einer Frequenzmodulation $m(t)$ über die Zeit definiert ist. Die Frequenzmodulation wird als Gauß'sches Rauschen mit Mittelwert 0 und Varianz $\sigma_R^2$ angenommen. Ein typisches Messsi-

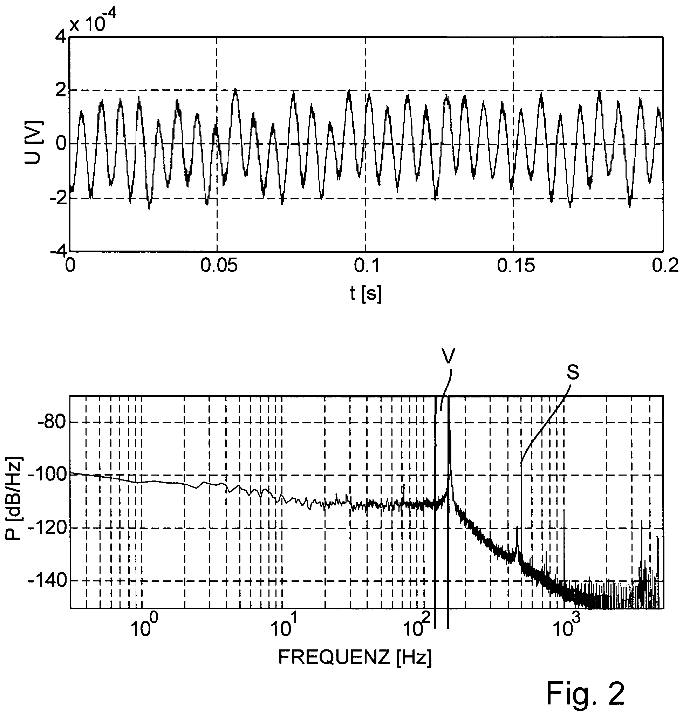

gnal und dessen Spektrum sind in Fig. 2 abgebildet.

Um nun das strömende Medium auf eine zweite Phase in Form eines Gerinnes oder Wandströmung hin zu überwachen und auch den Volumen- oder Massenanteil dieser zweiten Phase zu schätzen, wird vorzugsweise das Messsignal y(t), wie unterhalb in Bezug auf eine Weiterbildung erläutert wird, zunächst mit einer kleinen Relativen Bandbreite mit der Vortexfrequenz als Mittenfrequenz gefiltert. Das gefilterte reelle Signal s(t) oder aber auch im speziellen die Amplitude $A_s$ (t) des gefilterten reellen Signals s(t) enthält nun die nötige Information welche eine Aussage über das Vorhandensein einer zweiten Phase und deren Massenanteil zulässt. Die Fluktuationen der Amplitude des vorzugsweise schmalbandig gefilterten Signals können nun statistisch, vorzugsweise über die Standardabweichung der Amplitude $A_s$(t) oder aber auch über die Kurtosis des schmalbandig gefilterten Signals s(t), erfasst und ausgedrückt werden und stellen ein direktes Maß dar, welches für das Vorhandensein und Messen des Masse- oder Volumenanteils einer zweiten Phase herangezogen werden kann.

Eine mögliche ausgebildete Variante der oben beschriebenen selektiven Filterung und Signalverarbeitung wird hier genannt. Die Amplitude $A_s$(t) kann insbesondere über das analytische Signal des gefilterten Messsignals s(t) gewonnen werden. Hierzu wird das gefilterte Messsignal mittels Hilbert-Transformation in das gefilterte analytische Signal $s_a$(t) überführt.

$$(5) \quad s_a(t) = I(t) + j \cdot Q(t) = |A_s(t)| \cdot e^{j\Phi(t)}$$

$s_a$(t) setzt sich aus dem realen Anteil I(t) (In-Phase-Signal), welcher dem gefilterten reellen Signal s(t) entspricht, und dem komplexen Anteil Q(t) (Quadratur-Signal) zusammen.

j ist der komplexe Operator sqrt(-1).

Die momentane Betragsamplitude $|A_s(t)|$ zum Zeitpunkt t=$t_i$ kann dann wie in (6) berechnet werden:

$$(6) \quad |A_s(t)| = \sqrt{I(t)^2 + Q(t)^2}$$

Des Weiteren kann aus dem analytischen Signal über das Differenzieren der Phase φ(t) nach der Zeit die momentane Vortexfrequenz berechnet werden:

$$(7) \quad \Phi(t) = \arctan\left(\frac{Q(t)}{I(t)}\right)$$
$$f_v = \frac{1}{2\pi} \cdot \frac{d\Phi(t)}{dt}$$

Aufgrund der Wechselwirkung einer Wandströmung der zweiten bzw. dritten, entlang einer Rohrwand des Messrohres strömenden Phase mit dem sensitiven Abschnitt des ersten Wirbelsensors ist eine erhöhte Fluktuation der Amplitude des schmalbandig gefilterten analytischen Signals $s_a$(t) über die Zeit messbar. Die Wechselwirkung führt also zu einer erhöhten Amplitudenmodulation des erfassten vorzugsweise schmalbandig gefilterten Messsignals. Diese Fluktuationen können dabei auf unterschiedliche Weisen statistisch ausgewertet und als Maß dafür herangezogen werden, ob und gegebenenfalls wie viel Masse-/Volumendurchfluss einer Wandströmung in Form der zweiten bzw. dritten Phase auftritt. Dementsprechend kann durch Bestimmung der Fluktuationen der Betragsamplitude $|A_s(t)|$ des schmalbandig gefilterten analytischen Signals $s_a$(t) über die Zeit auf einfache Weise eine Wandströmung der zweiten Phase detektiert und gemessen werden. Vorzugsweise werden dabei die Fluktuationen des Betragsamplitude $|A_s(t)|$ innerhalb des Wirbelströmungsmess-gerätes automatisch, insbesondere durch eine entsprechend ausgebildete Elektronik, ausgewertet und überwacht. Mit "Elektronik" wird in dem Zusammenhang der vorliegenden Anmeldung sowohl auf eine elektronische Schaltung, durch welche Signale, insbesondere elektrische Signale, analog verarbeitet werden, als auch auf eine digital arbeitende Schaltung oder einen Prozessor, durch welche elektrische Signale digital verarbeitet werden, Bezug genommen. Insbesondere können diese beiden Formen auch gemischt auftreten.

Es ist bekannt, dass auch andere Ausbildungen zur Amplitudenmessung und zur statistischen Auswertung der Fluktuationen herangezogen werden können. So können beispielsweise auch ein Gleichrichter und ein nachgeschaltetes Tiefpassfilter eine mittlere Amplitude und deren Schwankung detektieren. Es ist auch bekannt, dass die Auswertung der Amplitudenfluktuationen über andere Wege erfolgen kann.

Wie schon in einem der vorgehenden Abschnitte erwähnt kann, neben anderen statistischen Auswertemöglichkeiten, insbesondere die Standardabweichung der Betragsamplitude $|A_s(t)|$ herangezogen werden. Es hat sich gezeigt, dass je höher die geschätzte Standardabweichung der Betragsamplitude ist, desto höher ist der Anteil der in Form einer Wandströmung auftretenden zweiten Phase.

Ferner kann als Maß für den Masse-/Volumenanteil der zweiten Phase auch die Kurtosis des vorzugsweise schmalbandig gefilterten Realteils des analytischen Signals $s_a$(t), kurz Re{$s_a$(t)}, welcher s(t) entspricht, herangezogen werden. Denn je höher die Kurtosis von Re{$s_a$(t)} ist, desto größer sind die Abweichungen von einer reinen Sinusschwingung, welche einen Wert der Kurtosis von 1,5 aufweist.

Sowohl bei der Bestimmung der Standardabweichung der Betragsamplitude des analytischen Signals als auch bei der Bestimmung der Kurtosis des vorzugsweise schmalbandig gefilterten Messsignals s(t) wird ermöglicht, dass im Voraus (für eine bestimmte Kombination einer ersten und einer zweiten Phase eines zwei- oder mehrphasigen strömenden Mediums) Grenzwerte für die Standardabweichung bzw. für die Kurtosis festgelegt werden können, bei deren Überschreiten eine zweite Phase vorliegt und dementsprechend festgestellt werden kann. Ferner kann zusätzlich oder alternativ ein weiterer Grenzwert festgelegt werden, bei dessen Überschreiten ein bestimmter Massedurchfluss der zweiten Phase überschritten und dementsprechend eine Warnmeldung ausgegeben wird.

Die Standardabweichung $\sigma_A$ der Betragsamplitude $A_s(t)$ kann aufgrund nachfolgender Gleichung (8) berechnet werden.

$$(8) \quad \sigma_A = \sqrt{\frac{1}{N} \sum_{t_i=t_1}^{t_i=t_N} \left( |A_s(t_i)| - \overline{A}_s \right)^2}$$

Insgesamt werden N Werte in die Berechnung miteinbezogen.

$\overline{A}_s$ ist das arithmetische Mittel der Betragsamplitude gemessen über N Werte:
Die Kurtosis $\beta$ (bzw. das normierte vierte Moment) des vorzugsweise schmalbandig gefilterten Messsignals $s(t)$ kann durch die nachfolgend angegebene Gleichung (9) aus dem vierten Moment $\mu_4$ und der Standardabweichung $\sigma_s$ berechnet werden. Die Standardabweichung $\sigma_s$ kann dabei, wie unter Gleichung (10) angegeben ist, und das vierte zentrale Moment $\mu_4$ kann, wie es unter Gleichung (11) angegeben ist, erhalten werden.

$$(9) \quad \beta = \frac{\mu_4}{\sigma_s^{\,4}}$$

$$(10) \quad \sigma_s = \sqrt{\frac{1}{N} \sum_{t_i=t_1}^{t_i=t_N} (s(t_i) - \overline{s})^2}$$

$$(11) \quad \mu_4 = \frac{1}{N} \sum_{t_i=t_1}^{t_i=t_N} (s(t_i) - \overline{s})^4$$

$t_i$ beschreibt einen diskreten Zeitpunkt der Messung

Insgesamt werden N Werte in die Berechnung miteinbezogen
$s(t_i)$ ist der Wert des schmalbandig gefilterten Messsignals zu Messzeitpunkt $t_i$
$\overline{s}$ ist das arithmetische Mittel der N Werte des schmalbandig gefilterten Messsignals:

Die Kurtosis $\beta$, bzw. das vierte Moment, ist dabei ein Maß für die Wölbung einer statistischen Verteilung (um deren Mittelwert). Neben dem vierten Moment gibt es bekannterweise auch das erste Moment, das dem Erwartungswert einer Zufallsvariablen, also dem Mittelwert, entspricht das zweite Moment, welches der Varianz entspricht und das dritte Moment, das nach Normierung auch als Schiefe bezeichnet wird. Schiefe und Wölbung werden oft als Maß der Abweichung von der Normalverteilung benutzt.

Während die Gleichungen (9), (10)und (11) jeweils für N diskrete Werte gelten, ist eine entsprechende Darstellung auch in Integralform für einen kontinuierlich erfassten Verlauf der jeweiligen Signale möglich. Die Bestimmung der Standardabweichung und/oder der Kurtosis durch eine entsprechend ausgebildete Elektronik innerhalb des Wirbelströmungsmessgerätes kann dabei derart erfolgen, dass die jeweils ermittelten Betragsamplituden $|A_s(t)|$ bzw. die Messwerte $s(t)$ zu den diskreten Zeitpunkten $t=t_i$, mit i als fortlaufende ganze Zahl in einem Puffer- oder Ringspeicher gespeichert werden. Die Speicherung kann dabei derart erfolgen, dass eine vorbestimmte Anzahl von Werten in dem Pufferspeicher speicherbar ist, und dass bei Hinzufügen eines neuen Wertes $|A_s(t_i)|$ bzw. $s(t_i)$ der älteste Wert aus dem Pufferspeicher gelöscht wird, so dass die einzelnen Werte durch die verschiedenen Positionen des Pufferspeichers "geschoben" werden. Die N Werte, die für die Berechnung der Standardabweichung bzw. der Kurtosis herangezogen werden, können dabei durch ein entsprechendes Auswahlfenster von N Werten, wie beispielsweise von 100 Werten, ausgewählt werden. Die Berechnung der Standardabweichung bzw. der Kurtosis kann beispielsweise innerhalb vorbestimmter Zeitabstände jedes Mal dann erfolgen, wenn innerhalb des Auswahlfensters ein (oder auch mehrere) Wert(e) hinzugekommen (und eine entsprechende Anzahl alter Werte herausgefallen ist) sind oder auch erst, wenn sämtliche Werte innerhalb des Auswahlfensters durch neue Werte ersetzt wurden.

Gemäß der schon in einem der oberen Abschnitte beschriebenen vorteilhaften Weiterbildung wird für die Beurteilung, ob das Messsignal charakteristische Merkmale für eine Wechselwirkung einer zweiten Phase in Form einer Wandströmung entlang einer Rohrwand des Messrohres mit dem sensitiven Abschnitt des ersten Wirbelsensors enthält, das Messsignal schmalbandig mit einer kleinen Relativen Bandbreite mit der Vortexfrequenz als Mittenfrequenz selektiv gefiltert Durch eine derartige selektive Filterung werden nur die Frequenzbereiche im Bereich um die Vortexfrequenz herum berücksichtigt und Störanteile mit Frequenzen, die sich von der Vortexfrequenz unterscheiden, herausgefiltert. Insbesondere weist dieser Frequenzbereich eine Breite von vorzugsweise kleiner als 50% der Vortexfrequenz mit der Vortexfrequenz als Mittenfrequenz auf.

Gemäß eine vorteilhaften Weiterbildung ist die Elektronik des Wirbelströmungsmessgerätes derart ausgebildet, dass durch diese aus dem vom Wirbelsensor erfassten Messsignal eine statistische Größe, welche ein Maß für die im schmalbandig gefilterten Signal $s(t)$ enthaltenen Amplitudenfluktuationen darstellt, bestimmbar ist.

Ferner ist durch die Elektronik unter Heranziehung einer Korrelation, die im Voraus im Rahmen einer Kalibrierung (für die jeweilige erste und zweite Phase eines Mediums) erstellt wurde, aus einer, durch das Wirbelströmungsmessgerät aus dem Messsignal bestimmten Vortexfrequenz und einer durch das Wirbelströmungsmessgerät aus dem Messsignal bestimmten Standardabweichung oder Kurtosis ein Massedurchfluss der vorbestimmten, zweiten Phase bestimmbar. Bei der Erstellung der Korrelation werden hierbei (im Voraus) im Rahmen einer Kalibrierung jeweils bekannte Massedurchflüsse einer Wandströmung einer vorbestimmten, zweiten Phase, Vortexfrequenzen, die für verschiedene Strömungsgeschwindigkeiten der ersten Phase durch das Wirbelströmungsmess-gerät aus dem Messsignal bestimmt wurden, sowie jeweils die zugehörigen, durch das Wirbelströmungsmessgerät aus dem Messsignal bestimmten Standardabweichungen oder Kurtosis zueinander in Beziehung gesetzt. Dies bedeutet, dass im Rahmen der Kalibrierung sowohl verschiedene (bekannte) Massedurchflüsse der zweiten Phase und verschiedene Strömungsgeschwindigkeiten der ersten Phase eingestellt werden und für diese verschiedenen Werte jeweils die zugehörige Vortexfrequenz und Standardabweichung oder Kurtosis durch das Wirbelströmungsmessgerät bestimmt werden. Anhand der Korrelation kann dann im Einsatz des Wirbelströmungsmessgerätes anhand der, aus dem Messsignal bestimmten Standardabweichung oder Kurtosis sowie aus der Vortexfrequenz unter Heranziehung der Korrelation auf einfache Weise quantitativ der Massedurchfluss der Wandströmung der zweiten Phase bestimmt werden. Eine derartige quantitative Bestimmung des Massedurchflusses der Wandströmung der zweiten Phase ist insbesondere bei waagrecht oder, falls eine waagrechte Anordnung nicht möglich ist, leicht schräg angeordnetem Messrohr vorteilhaft. Gemäß einer vorteilhaften Weiterbildung ist die Korrelation, insbesondere in Form einer Fit-Funktion, in dem Wirbelströmungsmessgerät hinterlegt.

Gemäß einer vorteilhaften Weiterbildung weist der Wirbelsensor ein schwenkbares Paddel auf, das sich durch eine Öffnung, die stromabwärts von dem Staukörper in einem unteren Abschnitt, insbesondere auf der am tiefsten gelegenen Mantellinie, des (schräg oder waagrecht angeordneten) Messrohres ausgebildet ist, in den Strömungspfad erstreckt. Dementsprechend weist der Wirbelsensor einen sensitiven Abschnitt (Paddel) auf, der angrenzend an der Rohrwand und (zumindest teilweise) in der unteren Rohrhälfte angeordnet ist. Der Einsatz eines Paddels als sensitiver Abschnitt ist deshalb vorteilhaft, da bei Auftreten einer Wandströmung einer zweiten bzw. dritten Phase eine Wechselwirkung mit dem Sensorpaddel stattfindet, und dadurch eine erhöhte Amplitudenfluktuation des erfassten Messsignals über die Zeit verursacht wird.

Vorzugsweise ist umliegend um das Paddel eine Vertiefung zur Aufnahme von der zweiten bzw. dritten Phase, die als Wandströmung vorbeiströmt, ausgebildet.

Durch die Vorsehung einer Vertiefung und die dadurch bedingte Ansammlung der zweiten bzw. dritten Phase, falls es als Wandströmung im Bereich des Paddels vorbeiströmt, wird die Wechselwirkung zwischen der zweiten bzw. der dritten Phase und dem Paddel erhöht. Die Vertiefung ist dabei vorzugsweise derart ausgebildet, dass die, in der Vertiefung verbleibende zweite bzw. dritte Phase dann, wenn die Wandströmung unterbrochen wird, von der vorbeiströmenden ersten Phase mitgenommen (bzw. ausgeblasen) wird und damit die Vertiefung wieder entleert wird. Dadurch wird gewährleistet, dass zu Zeiten, in denen keine Wandströmung auftritt, das Messsignal nicht durch einen, in der Vertiefung verbleibenden Rest der zweiten bzw. dritten Phase verfälscht wird.

Weitere Vorteile und Zweckmäßigkeiten der Erfindung ergeben sich anhand der nachfolgenden Beschreibung eines Ausführungsbeispiels unter Bezugnahme auf die beigefügten Figuren. Von den

Figuren zeigen:

Fig.1:      eine schematische Darstellung eines Wirbelströmungsmessgerätes in perspektivischer, teilweise aufgeschnittener Darstellung gemäß einer Ausführungsform der Erfindung; und

Fig. 2:      ein typisches Messsignal einer reinen einphasigen Strömung (Luft) mit überlagerten Störanteilen aufgrund von Vibrationen.

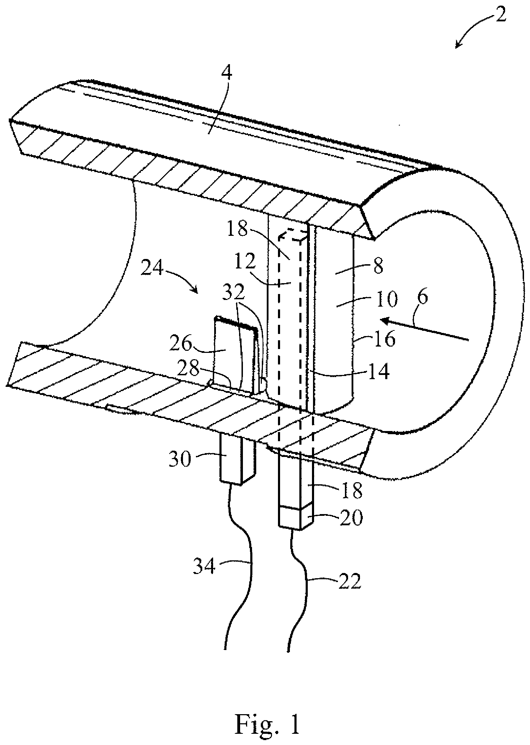

In Fig. 1 ist schematisch ein Wirbelströmungsmessgerät 2 gemäß einer Ausführungsform der Erfindung in perspektivischer Ansicht dargestellt. Das Wirbelströmungsmessgerät 2 weist ein Messrohr 4 auf, das in Fig. 1 in teilweise aufgeschnittener Darstellung gezeigt ist. Im Einsatz wird das Messrohr 4 derart in eine (nicht dargestellte) Rohrleitung, deren Durchfluss eines ersten Fluides (hier: Gas) zu bestimmen ist, eingesetzt, so dass es von dem ersten Fluid (entspricht der "ersten Phase") in einer Strömungsrichtung 6 durchströmt wird.

Das Wirbelströmungsmessgerät 2 weist einen Staukörper 8 auf, der sich in diametraler Richtung über den gesamten Innenquerschnitt des Messrohres 4 erstreckt. Der Staukörper 8 ist dabei derart ausgebildet, dass er auf der Seite, die der Strömung zugewandt ist, eine Prallfläche 10 aufweist, die von dem ersten Fluid und, sofern eine Teilchen- und/oder Tröpfchen-Strömung auftritt, von dieser Strömung angeströmt wird. Beidseitig der Prallfläche grenzt jeweils eine Seitenfläche 12 an, wobei sich die beiden Seitenflächen 12 entlang der Strömungsrichtung 6 verjüngen, so dass der Staukörper 8 einen, im Wesentlichen $\Delta$-förmigen Querschnitt aufweist. Beidseitig der Prallfläche ist jeweils eine (abgerundete) Abrisskante 14, 16 vorgesehen, die den Übergang zu den beiden Seitenflächen 12 bilden. Wie anhand der Fig. 1 ersichtlich ist, kann die jeweilige Phase des mehrphasigen Mediums (erste Phase sowie gegebenenfalls in der ersten Phase mitgetragene Teilchen- und/oder Tröpfchen) beidseitig des Staukörpers 8 vorbeiströmen, wobei sich, wie oberhalb erläutert wird, wechselseitig an den beiden Abrisskanten 14, 16 Wirbel ablösen. Durch die wechselseitige Ablösung der Wirbel wird, wie oberhalb erläutert wird, die Strömung der jeweiligen Phase bereits im Bereich stromaufwärts des Staukörpers 8 beeinflusst. Dies führt dazu, dass die Prallfläche 10 des Staukörpers 8 wechselseitig leicht schräg von dem jeweiligen Medium angeströmt wird. In dem Bereich hinter den beiden Abrisskanten 14, 16 bildet sich eine Kärmän'sche Wirbelstraße aus.

Tritt in der strömenden, ersten Phase (hier Gas) eine Teilchen- und/oder Tröpfchen-Strömung (hier: Tröpfchen-Strömung aus Wasser) auf, so prallt ein Teil der Teilchen- und/oder Tröpfchen, der in der Regel dem Verhältnis der Prallfläche 10 zu dem Innenquerschnitt des Messrohres 4 (bei einer gleichmäßig über den Innenquerschnitt verteilten Teilchen- und/oder Tröpfchen-Strömung) entspricht, auf die Prallfläche 10 des Staukörpers 8 auf. Durch solch einen Aufprall von Teilchen und/oder Tröpfchen werden akustische Signale erzeugt. Innerhalb des Staukörpers 8 ist ein Ankopplungsbauteil 18 angeordnet, das in Fig. 1 stabförmig dargestellt ist und das der akustischen Ankopplung zwischen einem akustischen Wandler 20 und dem Staukörper 8 (insbesondere dessen Prallfläche 10) dient. Über dieses Ankopplungsbauteil 18 werden die, bei dem Aufprall von Teilchen und/oder Tröpfchen auf die Prallfläche 10 erzeugten, akustischen Signale nach Außen zu einer Außenseite des Messrohres 4 geleitet. Außerhalb des Messrohres 4 ist an dem Ankopplungsbauteil 18 der akustische Wandler 20, der bei der vorliegenden Ausführungsform durch ein Piezoelement gebildet wird, derart angebracht, dass durch diesen die akustischen Signale erfassbar sind. Das Piezoelement weist dabei eine Resonanzfrequenz auf, die außerhalb der auszuwertenden Frequenzen liegt. Durch den akustischen Wandler 20 werden die akustischen Signale in entsprechende, elektrische Signale umgewandelt. Die, von dem akustischen Wandler 20 bereitgestellten elektrischen Signale werden anschließend an eine Auswerte-Elektronik des Wirbelströmungsmessgerätes gegeben, was in Fig. 1 schematisch durch das Kabel 22 angedeutet ist.

In Fig. 1 sind das Ankopplungsbauteil 18, der akustische Wandler 20 sowie die (noch zu erläuternde) Sensorik des Wirbelsensors nur schematisch dargestellt. Ferner sind in Fig. 1 Gehäusebauteile, die auf der Außenseite des Messrohres 4 zum Schutz des Ankopplungsbauteils 18, des akustischen Wandlers 20 sowie der Sensorik des Wirbelsensors vor äußeren Einflüssen vorgesehen sind, aus Gründen der Übersichtlichkeit nicht dargestellt.

Die elektrischen Signale, die durch den akustischen Wandler 20 ausgegeben werden, werden anschließend, wie es oberhalb im allgemeinen Beschreibungsteil erläutert wird, verstärkt und auf einen auszuwertenden Frequenzbereich gefiltert. Der auszuwertende Frequenzbereich umfasst beispielsweise einen Bereich von 100 kHz bis 1 MHz. Anschließend wird daraus durch die Auswerte-Elektronik, wie oberhalb im allgemeinen Beschreibungsteil erläutert wird, eine auszuwertende Messgröße, wie beispielsweise ein RMS-Wert, bestimmt. Wird lediglich eine Detektion einer Teilchen- und/oder Tröpfchen-Strömung durchgeführt, so ist die Auswerte-Elektronik beispielsweise derart ausgebildet, dass bei Über- (oder gegebenenfalls auch Unter-) -schreiten eines vorbestimmten Grenzwertes der Messgröße auf das Vorliegen einer Teilchen- und/oder Tröpfchen-Strömung geschlossen wird. Gegebenenfalls kann auch auf die Bestimmung einer auszuwertenden Messgröße verzichtet werden und es kann beispielsweise direkt ein Grenzwert für die Signalstärke des elektrischen Signals bestimmt werden. In der Regel wird bei solch einem Über- (oder gegebenenfalls Unter-) -schreiten eine entsprechende Meldung an einen Benutzer ausgegeben.

Soll zusätzlich eine quantitative Auswertung bezüglich der Teilchen- und/oder Tröpfchen-Strömung durchgeführt werden, so muss im Voraus im Rahmen einer Kalibrierung, wie es oberhalb im allgemeinen Beschreibungsteil erläutert wird, ein Übertragungsfaktor ($C_1$ bzw. $C_2$) bestimmt werden, durch den die kinetische Energie (Übertragungsfaktor $C_1$) einzelner Teilchen und/oder Tröpfchen bzw. durch den die kinetische Leistung (Übertragungsfaktor $C_2$) der Teilchen- und/oder Tröpfchen-Strömung mit der Messgröße korreliert wird. Hierbei wird auf die Gleichungen (2) und (3) sowie die zugehörige Beschreibung im allgemeinen Beschreibungsteil Bezug genommen. Über die Geschwindigkeit v der Teilchen- und/oder Tröpfchen-Strömung, die, wie nachfolgend erläutert, durch das Wirbelströmungsmessgerät 2 aus der Vortexfrequenz ermittelt werden kann, kann dann die Masse einzelner Teilchen und/oder Tröpfchen (Übertragungsfaktor $C_1$) bzw. der Massedurchfluss der Teilchen- und/oder Tröpfchen-Strömung bestimmt werden (vgl. Gleichungen (2) und (3)).

Das Wirbelströmungsmessgerät 2 weist ferner einen, stromabwärts von dem Staukörper 8 angeordneten Wirbelsensor 24 auf. Der Wirbelsensor 24 weist in dem vorliegenden Ausführungsbeispiel ein Paddel 26 auf, das sich durch eine Bohrung 28, die auf der, am tiefsten gelegenen Mantellinie des Messrohrs 4 ausgebildet ist, in den Strömungspfad erstreckt. Dabei ist das Paddel 26 in einer Ruhestellung parallel zu dem Staukörper 8 und fluchtend zu diesem angeordnet. Das Paddel 26 ist in einer Richtung senkrecht zu der Strömungsrichtung 6 und senkrecht zu der Erstreckungsrichtung des Paddels 26 schwenkbar. Dementsprechend wird das Paddel 26 im Einsatz aufgrund auftretender Druckschwankungen, insbesondere aufgrund der gebildeten Wirbel, hin- und herbewegt. Wie oberhalb erläutert wird, werden die Schwenkbewegungen des Paddels mittels eines (nicht näher dargestellten) DSC-Sensors 30 in ein elektrisches Messsignal umgewandelt. Das elektrische Messsignal wird dann an eine Auswerte-Elektronik des Wirbelströmungsmessgerätes 2 gegeben, was in Fig. 1 schematisch durch das Kabel 34 dargestellt ist. Die Auswerte-Elektronik bestimmt daraus, wie es allgemein bei Wirbelströmungsmessgeräten bekannt ist, die Vortexfrequenz. Über die Vortexfrequenz wiederum kann dann durch die Auswerte-Elektronik in bekannter Weise die Strömungsgeschwindigkeit der ersten Phase eines mehrphasigen in der Rohrleitung strömenden Mediums und damit auch die Strömungsgeschwindigkeit v der Teilchen- und/oder Tröpfchen-Strömung bestimmt werden. Diese Strömungsgeschwindigkeit v kann dann in die Gleichungen (2) und/oder (3) zur Bestimmung der Masse einzelner Teilchen und/oder Tröpfchen bzw. zur Bestimmung des Massedurchflusses der Teilchen- und/oder Tröpfchen-Strömung eingesetzt werden.

In einer, in Fig. 1 dargestellten Einsatzstellung des Wirbelströmungsmessgerätes 2 erstreckt sich das Messrohr 4 im Wesentlichen horizontal, während sich der Staukörper 8 im Wesentlichen vertikal, also parallel zu der Richtung der Schwerkraft, erstreckt. Das Paddel 26 erstreckt sich von der Unterseite her durch das Messrohr 4 in den Strömungspfad. Das Paddel 26 bildet dabei einen, auf auftretende Druckschwankungen ansprechenden, sensitiven Abschnitt, der teilweise angrenzend an der Rohrwand des Messrohres 4 angeordnet ist und der in einer unteren Hälfte des Messrohres 4 angeordnet ist. Tritt in dem Gas, welches in dem vorliegenden Ausführungsbeispiel die erste Phase des mehrphasigen strömenden Mediums bildet, ein Gerinne (zweite bzw. dritte Phase), wie beispielsweise ein Wasser-Gerinne, auf, so sammelt sich dieses aufgrund der Schwerkraft in dem unteren Bereich des Messrohres 4 an und strömt direkt angrenzend an dem Paddel 26. Umliegend um das Paddel 26 ist innerhalb der Bohrung 28 zusätzlich eine Vertiefung 32 ausgebildet, in der sich bei Auftreten eines Gerinnes ein Teil des Gerinnes ansammelt. Sowohl bei dem Vorbeiströmen des Gerinnes an dem Paddel 26 als auch durch die Ansammlung des Gerinnes innerhalb der Vertiefung 32 tritt eine Wechselwirkung des Gerinnes mit dem Paddel 26 auf. Aufgrund dieser Wechselwirkung wird das, über das Paddel 26 erfasste Messsignal beeinflusst. Insbesondere wird eine Amplitudenfluktuation des analytischen Signals des Messsignals erhöht. Auch diese Amplitudenfluktuationen werden durch die Auswerte-Elektronik ausgewertet. Wie im allgemeinen Teil der Beschreibung erläutert wird, kann dabei durch die Auswerte-Elektronik lediglich eine Detektion solch einer Wandströmung durchgeführt werden. Die Auswerte-Elektronik kann darüber hinaus aber auch eine quantitative Bestimmung der Wandströmung durchführen, wie im einleitenden Teil der Beschreibung, insbesondere unter Bezugnahme auf die Gleichungen (4) - (11), erläutert wird. Auf diese Detektion bzw. quantitative Bestimmung wird hier nicht nochmals explizit eingegangen.

Dementsprechend kann durch das Wirbelströmungsmessgerät 2 sowohl eine zweite Phase in Form einer Teilchen- und/oder Tröpfchen-Strömung sowie eine zweite bzw. dritte Phase in Form einer Wandströmung detektiert und quantitativ bestimmt werden, wobei die Teilchen-und/oder Tröpfchenströmung aus dem gleichen oder auch aus unterschiedlichen Stoffen wie die Wandströmung bestehen kann.

Die vorliegende Erfindung ist nicht auf die, unter Bezugnahme auf die Figur 1 erläuterte Ausführungsform beschränkt. Insbesondere ist es nicht zwingend erforderlich, dass ein separates Ankopplungs-Bauteil 18 eingesetzt wird, um die akustischen Signale auf eine Außenseite des Messrohres 4 zu leiten. Solch eine akustische Ankopplung kann gegebenenfalls auch durch das Bauteil selbst, wie beispielsweise durch den Staukörper 8, gebildet werden. Ferner muss der Wirbelsensor 24 nicht zwingend ein separat von dem Staukörper 8 ausgebildetes Paddel 26 aufweisen. Insbesondere kann der Wirbelsensor alternativ auch innerhalb des Staukörpers 8 ausgebildet sein. Bei dieser zweiten Variante ist innerhalb des Staukörpers 8, beispielsweise parallel zu dem Ankopplungsbauteil 18, eine Sackbohrung vorgesehen, in welcher der Wirbelsensor aufgenommen ist. Diese Sackbohrung erstreckt sich dabei parallel zu dem Staukörper 8 und weist mindestens eine Durchgangsöffnung auf, die eine Fluid-Verbindung zwischen dem jeweiligen Medium innerhalb des Messrohres und der Sackbohrung herstellt. Soll durch den Wirbelsensor auch eine Wandströmung erfasst werden, so ist vorzugsweise mindestens eine Durchgangsöffnung angrenzend an eine Rohrwand des Messrohres 4 vorgesehen. Der, innerhalb der Sackbohrung angeordnete Wirbelsensor kann dann Druckschwankungen, die in dem Messrohr 4 stromabwärts der Abrisskanten 14, 16 auftreten und insbesondere durch Wirbel hervorgerufen werden, erfassen und auf eine der oberhalb erläuterten Varianten in ein elektrisches Messsignal umwandeln. Der Wirbelsensor kann beispielsweise, wie oberhalb erläutert wird, eine schwenkbare Sensorhülse aufweisen, deren Schwenkbewegungen relativ zu einem, von den Druckschwankungen entkoppelten Abschnitt erfasst werden.

Fig. 2 zeigt ein typisches Messsignal einer reinen einphasigen Strömung (hier Luft) mit überlagerten Störanteilen auf Grund von Vibrationen. In der unteren Abbildung von Fig. 2 ist die spektrale Leistungsdichte des Signals, wie Ausschnittsweise in der oberen Abbildung von Fig. 2 dargestellt, abgebildet. Fig. 2 soll verdeutlichen, dass es, um eine zutreffende Aussage über den Anteil der zweiten Phase treffen zu können, notwendig ist, bevor eine insbesondere statistische Auswertung des Messsignals erfolgt, den Frequenzbereich V um die Vortexfrequenz schmalbandig aus dem Messsignal mittels eines schmalbandigen Filters zu selektieren. Damit wird gewährleistet, dass Störsignale (z.B. Störsignal S) nicht zur Verfälschung der Überwachung der zweiten Phase beitragen, insbesonders dann, wenn die Magnitude der Störanteile grösser ist als die des Nutzsignals, wie es bei kleinen Durchflussmengen der Fall ist.

**Patentansprüche**

1. Wirbelströmungsmessgerät zum Überwachen und/oder Messen eines in einer Rohrleitung strömenden, zumindest zeitweise zwei- oder mehrphasigen Mediums, das eine, insbesondere gasförmige, erste Phase mit einer ersten Dichte und eine zweite, insbesondere flüssige, Phase mit einer zweiten Dichte, als Teilchen und/oder Tröpfchen in der ersten Phase verteilt, aufweist, welches Wirbelströmungsmessgerät umfaßt:

- zumindest ein, in eine Rohrleitung einsetzbares Messrohr (4),
- einen Staukörper (8),
- einen, auf auftretende Druckschwankungen ansprechenden Wirbelsensor (24),
- einen akustischen Wandler (20)
- sowie eine Elektronik,
- wobei sich der Staukörper (8) in dem Messrohr (4) quer zu einer Strömungsrichtung (6) derart erstreckt, dass beidseitig von dem Staukörper (8) jeweils ein Strömungspfad gebildet wird, und dass an dem Staukörper (8) beidseitig wenigstens zwei Abrisskanten (14, 16) derart ausgebildet sind, dass sich an diesen im Einsatz *Kármán'sche* Wirbel ablösen, und
- wobei der Wirbelsensor (24) in Bezug auf eine Einbaulage stromabwärts von den Abrisskanten (14, 16) angeordnet und derart ausgebildet ist, dass durch diesen im Einsatz Druckschwankungen erfasst und in ein elektrisches Messsignal umgewandelt werden,
- wobei der akustische Wandler (20) im Staukörper (8) integral derart ausgebildet ist oder akustisch derart daran angekoppelt ist, dass durch den Aufprall von Teilchen und/oder Tröpfchen der zweiten Phase auf den Staukörper (8) erzeugte akustische Signale durch den akustischen Wandler (20) in elektrische Signale wandelbar sind,
- und wobei die Elektronik des Wirbelströmungsmessgerätes derart ausgebildet ist,

-- dass durch diese aus den von dem akustischen Wandler (20) bereitgestellten, elektrischen Signalen durch eine spektrale Signalverarbeitung und/oder durch eine statistische Auswertung eine Messgröße bestimmt wird, die nach vorbestimmten Kriterien ausgewertet wird und/oder
-- dass diese aus, über die Zeit erfassten Werten der gefilterten, von dem akustischen Wandler bereitgestellten, elektrischen Signale einen quadratischen Mittelwert (RMS) bildet und diesen als Messgröße auswertet,

wobei

die Elektronik des Wirbelströmungsmessgerätes derart ausgebildet ist, dass diese aus den erfassten Druckschwankungen eine Vortexfrequenz und daraus eine Geschwindigkeit der Teilchen- und/oder Tröpfchen-Strömung bestimmt,
und wobei die Elektronik des Wirbelströmungsmessgerätes derart ausgebildet ist, dass diese aus der Messgröße mittels eines, durch eine Kalibrierung zu bestimmenden Übertragungsfaktors, durch den die kinetische Energie einzelner Teilchen und/oder Tröpfchen bzw. die kinetische Leistung der Teilchen- und/oder Tröpfchen-Strömung mit der Messgröße korreliert wird, und der Geschwindigkeit der Teilchen- und/oder Tröpfchen-Strömung eine Anzahl und Masse einzelner Teilchen und/oder Tröpfchen bzw. den Massedurchfluss der Teilchen- und/oder Tröpfchen-Strömung bestimmt.

2. Wirbelströmungsmessgerät gemäß Anspruch 1, **dadurch gekennzeichnet, dass** der Staukörper (8) eine im Wesentlichen senkrecht zu der Strömungsrichtung (6) ausgerichtete Prallfläche (10) aufweist, die in einer Einbaulage des Wirbelströmungsmessgerätes der Strömung zugewandt ist.

3. Wirbelströmungsmessgerät gemäß Anspruch 1 oder 2, **dadurch gekennzeichnet, dass** der akustische Wandler (20) durch einen piezoelektrischen oder durch einen kapazitiven Wandler gebildet wird.

4. Wirbelströmungsmessgerät gemäß einem der vorangehenden Ansprüche, **dadurch gekennzeichnet, dass** der akustische Wandler (20) außerhalb des Messrohres (4) angeordnet ist und akustisch an den Staukörper (8) angekoppelt ist.

5. Wirbelströmungsmessgerät gemäß einem der vorangehenden Ansprüche, **dadurch gekennzeichnet, dass** eine Elektronik des Wirbelströmungsmessgerätes derart ausgebildet ist, dass durch diese die von dem akustischen Wandler (20) bereitgestellten, elektrischen Signale nach vorbestimmten Kriterien ausgewertet werden.

6. Wirbelströmungsmessgerät gemäß einem der vorangehenden Ansprüche, **dadurch gekennzeichnet, dass** eine Elektronik des Wirbelströmungsmessgerätes derart ausgebildet ist, dass durch diese die von dem akustischen Wandler (20) bereitgestellten elektrischen Signale auf eine auszuwertende Bandbreite gefiltert werden.

7. Wirbelströmungsmessgerät gemäß einem der vorangehenden Ansprüche, wobei die Elektronik des Wirbelströmungsmessgerätes derart ausgebildet ist, dass diese aus der Vortexfrequenz eine Strömungsgeschwindigkeit der ersten Phase des mehrphasigen Mediums bestimmt.

8. Wirbelströmungsmessgerät gemäß einem der vorangehenden Ansprüche, **gekennzeichnet durch** mindestens eine Blende zur Homogenisierung der Teilchen- und/oder Tröpfchen-Strömung der zweiten Phase, insbesondere durch eine siebförmige, gelochte oder gitterförmige Blende, die bezüglich der Strömungsrichtung (6) vor dem Staukörper (8) angeordnet ist.

9. Wirbelströmungsmessgerät gemäß einem der vorangehenden Ansprüche, **dadurch gekennzeichnet,**

- **dass** zum Detektieren einer zweiten oder dritten Phase in Form einer entlang einer Rohrwand strömenden Wandströmung, insbesondere eines Gerinnes, des mehrphasigen in der Rohrleitung strömenden Mediums, wobei die erste, insbesondere gasförmigen Phase des strömenden Mediums eine geringere Dichte als die zweite bzw. dritte Phase aufweist, der Wirbelsensor (24) einen, auf auftretende Druckschwankungen ansprechenden, sensitiven Abschnitt (26), der zumindest teilweise angrenzend an der Rohrwand des Messrohres (4) angeordnet ist, aufweist,
- **dass** das Wirbelströmungsmessgerät derart ausgebildet ist, dass Druckschwankungen, die im Einsatz über den sensitiven Abschnitt (26) erfasst werden, in ein elektrisches Messsignal umgewandelt werden, und
- **dass** eine Elektronik des Wirbelströmungsmessgerätes, durch die das elektrische Messsignal im Einsatz verarbeitet wird, derart ausgebildet ist, dass bei Erfassen eines Messsignals, das charakteristisch für eine Wechselwirkung einer Wandströmung der zweiten bzw. dritten, entlang einer Rohrwand des Messrohres (4) strömenden Phase des mehrphasigen Mediums mit dem sensitiven Abschnitt (26) des Wirbelsensors (24) ist, auf die Existenz einer Wandströmung der zweiten bzw. dritten Phase in dem Messrohr (4) geschlossen wird.

10. Wirbelströmungsmessgerät gemäß Anspruch 9, **dadurch gekennzeichnet, dass** die Elektronik des Wirbelströmungsmessgerätes derart ausgebildet ist, dass ein Messsignal, bei dem im Vergleich zu einer reinen, einphasigen Strömung der ersten Phase die Fluktuationen der Amplitude des vorzugsweise schmalbandig gefilterten des durch den Wirbelsensor (24) erfassten Messsignals über die Zeit erhöht sind, charakteristisch für eine Wechselwirkung einer Wandströmung der zweiten bzw. dritten, entlang einer Rohrwand des Messrohres (4) strömenden Phase mit dem sensitiven Abschnitt (26) des Wirbelsensors (24) ist.

11. Wirbelströmungsmessgerät gemäß Anspruch 9 oder 10, **dadurch gekennzeichnet, dass** die Elektronik des Wirbelströmungsmessgerätes derart ausgebildet ist,

- dass durch diese aus dem Messsignal eine statistische Größe, die ein Maß für die Fluktuationen der Amplitude des vorzugsweise schmalbandig gefilterten, durch den Wirbelsensor (24) erfassten Messsignals ist, bestimmbar ist, und
- dass durch diese unter Heranziehung einer Korrelation, in der im Rahmen einer Kalibrierung jeweils bekannte Massedurchflüsse einer Wandströmung einer vorbestimmten, zweiten bzw. dritten Phase eines mehrphasigen Mediums, Vortexfrequenzen, die für verschiedene Strömungsgeschwindigkeiten der ersten Phase des mehrphasigen Mediums aus dem Messsignal bestimmt wurden, sowie jeweils die zugehörige, bestimmte statistische Größe zueinander in Beziehung gesetzt sind, aus einer, durch das Wirbelströmungsmessgerät aus dem Messsignal bestimmten Vortexfrequenz und einer, aus dem Messsignal bestimmten statistischen Größe ein Massedurchfluss der vorbestimmten, zweiten bzw. dritten Phase bestimmbar ist.

**Claims**

1. Vortex flowmeter designed to monitor and/or measure a medium flowing in a pipe, wherein said medium is at least temporarily two-phase or multi-phase, which has a first phase, particularly gaseous, with a first density and a second phase, particularly liquid, with a second density, distributed as particles and/or drops in the first phase, wherein said vortex flowmeter comprises:

- at least one measuring tube (4) which can be inserted into a pipe,
- a bluff body (8),
- a vortex sensor (24) responding to variations in pressure,
- an acoustic transducer (20)
- as well as an electronics unit,
- wherein the bluff body (8) extends in the measuring tube (4) at a right angle to a flow direction (6) in such a way that a flow path is formed on both sides of the bluff body (8), and in that at least two separation edges (14, 16) are formed on the bluff body (8) on both sides in such a way that Karman vortices are shed during use, and
- wherein the vortex sensor (24) is arranged, in relation to a mounting position, downstream from the separation edges (14, 16) and is formed in such a way that it measures variations in pressure during use, which are converted into an electrical measuring signal,

- wherein the acoustic transducer (20) is integrally formed in the bluff body (8) or is acoustically coupled to it in such a way that acoustic signals generated by the impact of particles and/or droplets of the second phase on the bluff body (8) can be converted into electrical signals by the acoustic transducer (20),

- and wherein the electronics unit of the vortex flowmeter is designed in such a way that

-- it can determine a measured variable from the electrical signals provided by the acoustic transducer (20) by spectral signal processing and/or by a statistical evaluation, wherein said measured variable is evaluated according to predefined criteria and/or

-- it forms a quadratic mean value (RMS) from values, captured over time, of the filtered electrical signals that are provided by the acoustic transducer, and evaluates said mean value as a measured variable,

wherein the electronics unit of the vortex flowmeter is designed in such a way to determine a vortex frequency from the detected variations in pressure and, on the basis of this, to determine a flow velocity of the particles and/or droplets,

and wherein the electronics unit of the vortex flowmeter is designed to determine a number and a mass of individual particles and/or droplets or the mass flow of the particles and/or droplets from the measured variable using a transmission factor to be determined by a calibration, wherein by means of said factor the kinetic energy of individual particles and/or droplets or the kinetic power of the particle and/or droplet flow is correlated to the measured variable, and on the basis of the flow velocity of the particles and/or droplets.

2. Vortex flowmeter as claimed in Claim 1, **characterized in that** the bluff body (8) has an impact surface (10) that is essentially aligned perpendicularly to the flow direction (6), wherein said surface faces towards the flow in a mounting position of the vortex flowmeter.

3. Vortex flowmeter as claimed in Claim 1 or 2, **characterized in that** the acoustic transducer (20) is formed by a piezoelectric or capacitive transducer.

4. Vortex flowmeter as claimed in one of the previous claims, **characterized in that** the acoustic transducer (20) is arranged outside the measuring tube (4) and is acoustically coupled to the bluff body (8).

5. Vortex flowmeter as claimed in one of the previous claims, **characterized in that** an electronic unit of the vortex flowmeter is designed in such a way that it evaluates the electrical signals provided by the acoustic transducer (20) according to predefined criteria.

6. Vortex flowmeter as claimed in one of the previous claims, **characterized in that** an electronic unit of the vortex flowmeter is designed in such a way that it filters the electrical signals provided by the acoustic transducer (20) on a bandwidth to be evaluated.

7. Vortex flowmeter as claimed in one of the previous claims, **characterized in that** the electronics unit of the vortex flowmeter is designed in such a way that it determines a flow velocity of the first phase of the multiphase medium from the vortex frequency.

8. Vortex flowmeter as claimed in one of the previous claims, **characterized by** at least a plate to homogenize the flow of particles and/or droplets in the second phase, particularly **characterized by** a sieve-like, perforated or grid-like plate which is arranged upstream from the bluff body (8) in relation to the flow direction (6).

9. Vortex flowmeter as claimed in one of the previous claims, **characterized in that**

- in order to detect a second or a third phase in the form of a wall flow flowing along a tube wall, particularly a channel, of the multiphase medium flowing in the pipe, wherein the first - particularly gaseous - phase of the flowing medium has a density that is lower than the second or third phase, the vortex sensor (24) has a sensitive section (26) that reacts to variations in pressure that occur, wherein said sensitive section is at least partially arranged so that it is adjacent to the wall of measuring tube (4),

- the vortex flowmeter is designed in such a way that variations in pressure that are detected during operation via the sensitive section (26) are converted to an electrical measuring signal, and

- an electronic unit of the vortex flowmeter, by means of which the electrical measuring signal is processed during operation, is designed in such a way that, when a measuring signal is captured that is characteristic of an interaction between a wall flow of the second or third phase of the multiphase medium, flowing along a wall of the measuring tube (4), and the sensitive section (26) of the vortex sensor (24), it is possible to deduce the existence of a wall flow of the second or third phase in the measuring tube (4).

10. Vortex flowmeter as claimed in Claim 9, **character-**

**ized in that** the electronics unit of the vortex flowmeter is designed in such a way that a measuring signal - where the fluctuations of the amplitude of the measuring signal which is preferably filtered in the narrow band and captured by the vortex sensor (24) are high over time compared to a pure, single-phase flow of the first phase - is characteristic of an interaction between a wall flow of the second or third phase, flowing along a wall of the measuring tube (4), and the sensitive section (26) of vortex sensor (24).

11. Vortex flowmeter as claimed in Claim 9 or 10, **characterized in that** the electronics unit of the vortex flowmeter is designed in such a way that

   - it can be used to determine a statistical variable from the measuring signal, wherein said statistical variable is a measure for the fluctuations of the amplitude of the measuring signal, which is preferably filtered in the narrow range, wherein said signal is captured by the vortex sensor (24), and
   - it can be used to determine a mass flow of a predefined second or third phase from a vortex frequency determined by the vortex flowmeter from the measuring signal and from a statistical variable determined from the measuring signal by using a correlation in which - within the framework of a calibration - known mass flows of a wall flow of a predefined second or third phase of a multiphase medium, vortex frequencies that have been determined from the measuring signal for various flow velocities of the first phase of the multiphase medium, and the corresponding statistical variable that has been determined correlated to one another.

**Revendications**

1. Débitmètre vortex destiné à la surveillance et/ou à la mesure d'un produit s'écoulant dans une conduite, lequel produit est au moins temporairement à deux ou à plusieurs phases, lequel produit présente une première phase, notamment gazeuse, présentant une première densité et une deuxième phase, notamment liquide, présentant une deuxième densité et répartie sous forme de particules et/ou de gouttelettes dans la première phase, lequel débitmètre vortex comprend :

   - au moins un tube de mesure (4) pouvant être inséré dans une conduite,
   - un corps de retenue (8),
   - un capteur vortex (24) réagissant aux variations de pression,
   - un transducteur acoustique (20)

   - ainsi qu'une électronique,
   - le corps de retenue (8) s'étendant dans le tube de mesure (4) transversalement à un sens d'écoulement (6) de telle sorte qu'un chemin d'écoulement est formé des deux côtés du corps de retenue (8), et que sur le corps de retenue (8) sont formées des deux côtés au moins deux arêtes de détachement (14, 16) de telle sorte que des tourbillons de Karman se détachent sur celles-ci lors de l'utilisation, et
   - le capteur vortex (24) étant disposé, par rapport à une position de montage, en aval des arêtes de détachement (14, 16) et étant conçu de telle sorte que des variations de pression sont détectées par celui-ci, pendant l'utilisation, et converties en un signal de mesure électrique,
   - le transducteur acoustique (20) étant formé intégralement dans le corps de retenue (8) ou y étant couplé acoustiquement de telle sorte que des signaux acoustiques générés par l'impact de particules et/ou de gouttelettes de la deuxième phase sur le corps de retenue (8) peuvent être convertis en signaux électriques par le transducteur acoustique (20),
   - et l'électronique du débitmètre vortex étant conçue de telle sorte

     -- qu'elle permet de déterminer, à partir des signaux électriques fournis par le transducteur acoustique (20), par un traitement spectral des signaux et/ou par une évaluation statistique, une grandeur de mesure qui est évaluée selon des critères prédéfinis et/ou

     -- que celle-ci forme une valeur moyenne quadratique (RMS) à partir de valeurs, saisies dans le temps, des signaux électriques filtrés fournis par le transducteur acoustique, et évalue ladite valeur moyenne comme grandeur de mesure,

   l'électronique du débitmètre vortex étant conçue de telle sorte qu'elle détermine une fréquence vortex à partir des variations de pression détectées et, à partir de là, une vitesse de l'écoulement de particules et/ou de gouttelettes,
   et l'électronique du débitmètre vortex étant conçue de telle sorte qu'elle détermine - à partir de la grandeur de mesure, au moyen d'un facteur de transmission à déterminer par un étalonnage, facteur par lequel l'énergie cinétique de particules et/ou de gouttelettes individuelles ou la puissance cinétique de l'écoulement de particules et/ou de gouttelettes est corrélée à la grandeur de mesure, et à partir de la vitesse de l'écoulement de particules et/ou de gouttelettes - un nombre et une masse de particules et/ou de gouttelettes individuelles ou le débit massique de l'écoulement de particules et/ou de gouttelettes.

**2.** Débitmètre vortex selon la revendication 1, **caractérisé en ce que** le corps de retenue (8) présente une surface d'impact (10) orientée pour l'essentiel perpendiculairement au sens d'écoulement (6), laquelle surface est tournée vers l'écoulement dans une position de montage du débitmètre vortex.

**3.** Débitmètre vortex selon la revendication 1 ou 2, **caractérisé en ce que** le transducteur acoustique (20) est formé par un transducteur piézoélectrique ou par un transducteur capacitif.

**4.** Débitmètre vortex selon l'une des revendications précédentes, **caractérisé en ce que** le transducteur acoustique (20) est disposé à l'extérieur du tube de mesure (4) et est couplé acoustiquement au corps de retenue (8).

**5.** Débitmètre vortex selon l'une des revendications précédentes, **caractérisé en ce qu'**une électronique du débitmètre vortex est conçue de telle sorte à évaluer les signaux électriques fournis par le transducteur acoustique (20) selon des critères prédéfinis.

**6.** Débitmètre vortex selon l'une des revendications précédentes, **caractérisé en ce qu'**une électronique du débitmètre vortex est conçue de telle sorte que les signaux électriques fournis par le transducteur acoustique (20) sont filtrés par celle-ci sur une largeur de bande à évaluer.

**7.** Débitmètre vortex selon l'une des revendications précédentes, **caractérisé en ce que** l'électronique du débitmètre vortex est conçue de telle sorte à déterminer une vitesse d'écoulement de la première phase du produit multiphasique à partir de la fréquence vortex.

**8.** Débitmètre vortex selon l'une des revendications précédentes, **caractérisé par** au moins un diaphragme destiné à homogénéiser l'écoulement de particules et/ou de gouttelettes de la deuxième phase, notamment par un diaphragme perforé ou en forme de tamis ou en forme de grille, lequel diaphragme est disposé en amont du corps de retenue (8) par rapport au sens d'écoulement (6).

**9.** Débitmètre vortex selon l'une des revendications précédentes, **caractérisé**

     - **en ce que**, pour détecter une deuxième ou une troisième phase sous la forme d'un écoulement de paroi s'écoulant le long d'une paroi de tube, notamment d'un caniveau, du produit multiphasique s'écoulant dans la conduite, la première phase, notamment gazeuse, du produit en écoulement présentant une densité inférieure à celle de la deuxième ou de la troisième phase, le capteur vortex (24) présente une partie sensible (26) réagissant aux variations de pression qui se produisent, laquelle partie sensible est disposée au moins partiellement de manière adjacente à la paroi du tube de mesure (4),

     - **en ce que** le débitmètre vortex est conçu de telle sorte que les variations de pression qui sont détectées en cours d'utilisation via la partie sensible (26) sont converties en un signal de mesure électrique, et

     - **en ce qu'**une électronique du débitmètre vortex, par laquelle le signal de mesure électrique est traité lors de l'utilisation, est conçue de telle sorte que, lors de l'acquisition d'un signal de mesure qui est caractéristique d'une interaction d'un écoulement de paroi de la deuxième ou de la troisième phase, s'écoulant le long d'une paroi du tube de mesure (4), du produit multiphasique avec la partie sensible (26) du capteur vortex (24), on en déduit l'existence d'un écoulement de paroi de la deuxième ou de la troisième phase dans le tube de mesure (4).

**10.** Débitmètre vortex selon la revendication 9, **caractérisé en ce que** l'électronique du débitmètre vortex est conçue de telle sorte qu'un signal de mesure - pour lequel les fluctuations de l'amplitude du signal de mesure de préférence filtré dans une bande étroite du signal de mesure saisi par le capteur vortex (24) sont augmentées dans le temps par rapport à un écoulement pur monophasé de la première phase - est caractéristique d'une interaction d'un écoulement de paroi de la deuxième ou de la troisième phase s'écoulant le long d'une paroi du tube de mesure (4), avec la partie sensible (26) du capteur vortex (24).

**11.** Débitmètre vortex selon la revendication 9 ou 10, **caractérisé en ce que** l'électronique du débitmètre vortex est conçue de telle manière

     - qu'elle permet de déterminer, à partir du signal de mesure, une grandeur statistique qui est une mesure des fluctuations de l'amplitude du signal de mesure, de préférence filtré dans une bande étroite, lequel signal est mesuré par le capteur vortex (24), et

     - que, par celle-ci - en utilisant une corrélation dans laquelle, dans le cadre d'un étalonnage, des débits massiques respectivement connus d'un écoulement de paroi d'une deuxième ou d'une troisième phase, prédéfinie, d'un produit multiphasique, des fréquences vortex qui ont été déterminées à partir du signal de mesure pour différentes vitesses d'écoulement de la première phase du produit multiphasique, ainsi que la grandeur statistique déterminée correspondante, sont mises en relation les unes avec les autres - un débit massique de la deuxième ou troisième phase, prédéfinie, peut être déterminé à partir d'une fréquence vortex déterminée par le débitmètre vortex à partir du signal de mesure et d'une grandeur statistique déterminée à partir du signal de mesure.

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6912918 B

- US 4674337 A